(19) **Europäisches Patentamt / European Patent Office / Office européen des brevets**

(11) **EP 3 088 069 B1**

(12) **EUROPEAN PATENT SPECIFICATION**

(45) Date of publication and mention of the grant of the patent:
**02.08.2023 Bulletin 2023/31**

(21) Application number: **14873851.1**

(22) Date of filing: **24.10.2014**

(51) International Patent Classification (IPC):
**B01D 63/02** $^{(2006.01)}$        **B01D 65/00** $^{(2006.01)}$

(52) Cooperative Patent Classification (CPC):
**B01D 63/02; B01D 63/024; B01D 65/003;**
B01D 2313/04; B01D 2313/08; B01D 2313/13;
B01D 2313/20; B01D 2313/23; B01D 2313/44;
B01D 2315/08

(86) International application number:
**PCT/JP2014/078407**

(87) International publication number:
**WO 2015/098266 (02.07.2015 Gazette 2015/26)**

(54) **HOLLOW-FIBER MEMBRANE MODULE**

HOHLFASERMEMBRANMODUL

MODULE MEMBRANAIRE À FIBRES CREUSES

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **27.12.2013 JP 2013271328**
         **31.03.2014 JP 2014071767**

(43) Date of publication of application:
**02.11.2016 Bulletin 2016/44**

(73) Proprietor: **Toray Industries, Inc.**
**Tokyo 103-8666 (JP)**

(72) Inventors:
• **MATSUMOTO, Hiroshi**
  **Otsu-shi**
  **Shiga 520-8558 (JP)**
• **IKEDA, Mikiko**
  **Otsu-shi**
  **Shiga 520-8558 (JP)**
• **KOBAYASHI, Atsushi**
  **Otsu-shi**
  **Shiga 520-8558 (JP)**
• **SHIMURA, Shun**
  **Otsu-shi**
  **Shiga 520-8558 (JP)**
• **TAKEUCHI, Norihiro**
  **Otsu-shi**
  **Shiga 520-8558 (JP)**
• **KANAI, Hiroaki**
  **Otsu-shi**
  **Shiga 520-8558 (JP)**

(74) Representative: **Hoefer & Partner Patentanwälte mbB**
**Pilgersheimer Straße 20**
**81543 München (DE)**

(56) References cited:
EP-A1- 1 310 291          WO-A1-02/04101
WO-A1-2012/043679       WO-A1-2012/043679
WO-A1-2013/136903       WO-A1-2014/175409
JP-A- H0 549 873          JP-A- S60 106 467
JP-A- S62 204 804         JP-A- S62 258 709
JP-A- 2000 037 616        JP-A- 2000 084 375
JP-A- 2003 117 354        JP-A- 2010 167 372
JP-U- S6 125 903          US-A- 4 647 377
US-A1- 2007 039 868

## Description

### TECHNICAL FIELD

The present invention relates to a hollow-fiber membrane module for use in the fields of water treatment, fermentation industry, production of medicines, food industry, etc.

### BACKGROUND ART

A hollow-fiber membrane module according to the preamble portion of claim 1 is known from US 4 647 377 A, from WO 2012/043679 A1, and from US 2007/039868 A1. Fermentation methods which are methods for substance production involving incubation of microorganisms or cells to be incubated can be roughly classified into a batch fermentation method where microorganisms or cells to be incubated as well as a starting material are prepared in every fermentation step, and a continuous fermentation method where a starting material is added sequentially to microorganisms or cells to be incubated, thereby maintaining fermentation.

In relation to the continuous fermentation method, a method has been proposed in which the fermentation culture is filtrated through a separation membrane to recover a chemical substance from the filtrate and simultaneously the concentrated fermentation culture that contains microorganisms or cultured cells is refluxed to keep the microorganisms concentration or the cultured cells concentration high in the fermentation culture.

Especially for a separation membrane, a method of using a hollow-fiber membrane capable of efficiently increasing the membrane area has become employed more than a flat membrane that has heretofore been used, and generally during operation or after operation for a predetermined period of time, the membrane is cleaned so as to restore the filtration performance of the hollow-fiber membrane to thereby increase the fermentation production efficiency more efficiently for a longer period of time.

In a hollow-fiber membrane module, a large number of hollow-fiber membranes are bundled and fixed and therefore both ends of the hollow-fiber membrane bundle are fixed with resin. On the upper side face of the housing that houses the hollow-fiber membrane bundle, an upper nozzle is arranged for circulation or discharge of cleaning liquid. In addition, around the upper part of the hollow-fiber membrane bundle, a cylindrical flow regulation cylinder may be arranged, and in the side wall of the flow regulation cylinder, a flow regulation hole communicated with the nozzle is formed.

Heretofore, when the effective membrane area per the housing volume is desired to be increased by densely charging hollow-fiber membrane bundles in the housing, the circular channel formed between the housing and the flow regulation cylinder is narrowed, and in such a case, when a concentrated liquid or a cleaning liquid is discharged out, there may occur a phenomenon of high pressure drop. In this case, the driving force necessary for filtration operation and the cleaning liquid feed pressure during cleaning must be increased, therefore causing a problem of cost increase in filtration operation.

For solving the problem relating to the positioning of housing, nozzle and hollow-fiber membrane, for example, as shown in Patent Document 1, a taper configuration of such that, in the part facing the flow regulation cylinder, the inner diameter of the housing becomes smaller in the area nearer to the center part thereof is said to be effective. In Patent Document 2, a configuration for effective discharge of a vapor-liquid mixture after module cleaning is proposed.

### BACKGROUND ART DOCUMENT

### PATENT DOCUMENT

Patent Document 1: JP-B-7-79953
Patent Document 2: JP-A-2010-234200
Patent Document 3: WO2008/035593

### SUMMARY OF THE INVENTION

### PROBLEMS THAT THE INVENTION IS TO SOLVE

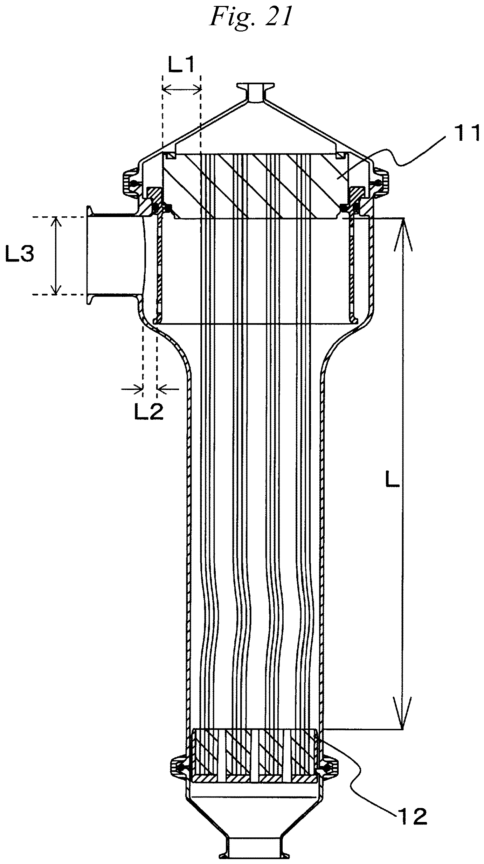

In view of the operability in producing a hollow-fiber membrane module and in view of the cleanability of hollow-fiber membranes in module cleaning, a hollow-fiber membrane bundle is arranged inside a housing in such a manner that both ends thereof are fitted to the housing via a resin while kept loosened therein. "Loosened" means that the length of the hollow-fiber membrane running from the lower end of the upper resin 11 to the upper end of the lower resin 12 is longer than the positional linear distance L (see Fig. 21) from the lower end of the upper resin 11 to the upper end of the lower resin 12.

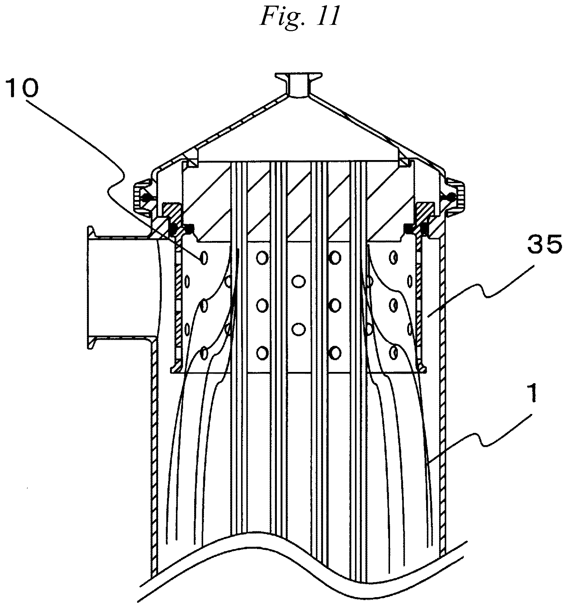

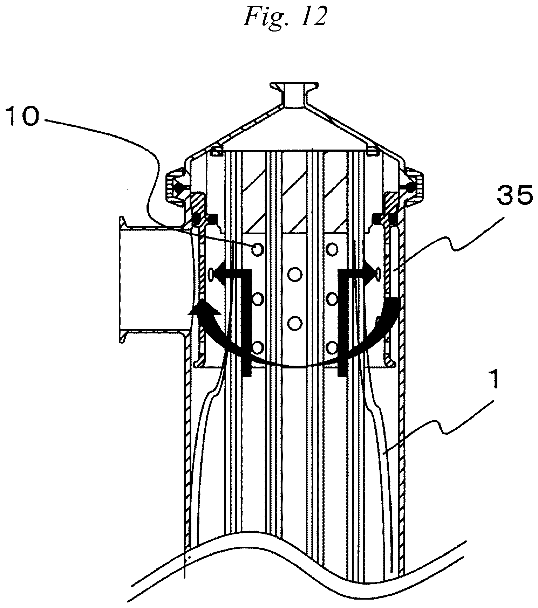

A fermentation culture that is to be a raw liquid before filtration and a cleaning liquid flow out to the circular channel 35 around a flow regulation cylinder after having passed through the flow regulation hole 10 formed on a flow regulation cylinder 9, but as shown in Fig. 11 and Fig. 12, there often occurred a phenomenon that the hollow-fiber membrane 1 may follow the flow of the filtrated liquid or the cleaning liquid to be discharged to thereby clog the flow regulation hole 10. Similarly, there also occurred a problem of increase in the operation driving force in filtration operation or increase in the feed pressure of a cleaning liquid. In addition, as the hollow-fiber membrane 1 follows to clog the flow regulation hole 10, there also occurred a problem of damage to the hollow-fiber membrane 1 itself.

For solving this problem, a groove was formed on the inner wall of the flow regulation cylinder to prevent the flow regulation cylinder from being clogged by the hollow-fiber membrane, as shown in Patent Document 3. However, in use under a severe condition that a fermentation culture or a cleaning liquid is flowed at a high flow rate, there may occur a risk that the hollow-fiber membrane at the outer peripheral part of the hollow-fiber membrane bundle would be in contact with the groove formed on the side peripheral surface of the flow regulation cylinder so that the hollow-fiber membrane would be abraded and damaged.

Further, the hollow-fiber membrane bundle 2 follows the flow of a fermentation culture that is to be a raw liquid before filtration, or follows the flow of a cleaning liquid to be lifted up to thereby augment the loosening of the hollow-fiber membrane 1, and therefore there may occur still another risk that the hollow-fiber membrane 1 would clog the flow regulation hole 10.

An object of the present invention is to provide a hollow-fiber membrane module capable of preventing an increase in pressure drop to be caused by sticking of the hollow-fiber membrane to holes and preventing the hollow-fiber membrane from being damaged in the case where a raw liquid before filtration is introduced and circulated in the hollow-fiber membrane module at a high flow rate or in the case where a membrane cleaning liquid is discharged out and circulated in the hollow-fiber membrane module.

MEANS FOR SOLVING THE PROBLEMS

In order to solve the above-mentioned problems, the present invention is defined in the appended claims.

ADVANTAGE OF THE INVENTION

According to the hollow-fiber membrane module of the present invention, increase in pressure drop at a high circulation flow rate can be prevented and damage to the hollow-fiber membrane to be caused by contact between the hollow-fiber membrane and the groove formed on the inner wall of a flow regulation cylinder can also be prevented.

BRIEF DESCRIPTION OF THE DRAWINGS

[Fig. 1] Fig. 1 is a diagrammatic vertical sectional view of a cartridge type hollow-fiber membrane module of a first embodiment.
[Fig. 2] Fig. 2 is a diagrammatic vertical sectional view of the hollow-fiber membrane cartridge in the first embodiment.
[Fig. 3] Fig. 3 is a diagrammatic vertical sectional view of the housing in the first embodiment.
[Fig. 4] Fig. 4 is an oblique view of the flow regulation cylinder in the first embodiment.

[Fig. 5] Fig. 5 is a diagrammatic vertical sectional view of the flow regulation cylinder in the first embodiment.
[Fig. 6] Fig. 6 is a diagrammatic vertical sectional view of the first potting in the first embodiment.
[Fig. 7] Fig. 7 is a circulation path diagram of cross flow in the first embodiment.
[Fig. 8] Fig. 8 is a flow path diagram of a filtrated liquid in the first embodiment.
[Fig. 9] Fig. 9 is an enlarged view of the part P in Fig. 8.
[Fig. 10] Fig. 10 is a diagrammatic vertical sectional view of the upper part of the cartridge type hollow-fiber membrane module of the first embodiment.
[Fig. 11] Fig. 11 is a diagrammatic vertical sectional view of the upper part of an already-existing cartridge type hollow-fiber membrane module.
[Fig. 12] Fig. 12 is a diagrammatic vertical sectional view of the upper part of an already-existing cartridge type hollow-fiber membrane module.
[Fig. 13] Fig. 13 is an enlarged view of the part Q in Fig. 10.
[Fig. 14] Fig. 14 is a housing of another embodiment.
[Fig. 15] Fig. 15 is a housing of another embodiment.
[Fig. 16] Fig. 16 is a housing of another embodiment.
[Fig. 17] Fig. 17 is a hollow-fiber membrane module of another embodiment not falling under the scope of the present invention.
[Fig. 18] Fig. 18 is a hollow-fiber membrane module of another embodiment not falling under the scope of the present invention.
[Fig. 19] Fig. 19 is a hollow-fiber membrane module of another embodiment not falling under the scope of the present invention.
[Fig. 20] Fig. 20 is a diagrammatic vertical sectional view showing a condition where loosening of hollow-fiber membranes has occurred in the range in which flow regulation holes exist in a hollow-fiber membrane module.
[Fig. 21] Fig. 21 is a view showing a distance L1 between the outermost diameter of a hollow-fiber membrane existing region and the inner surface of a flow regulation cylinder, a distance L2 between the inner surface of a housing and the outer surface of a flow regulation cylinder at the position where a nozzle is arranged on the side surface of a housing, and an inner diameter L3 of the nozzle arranged on the side surface of the housing.
[Fig. 22] Fig. 22 is a diagrammatic sectional view showing an example of a structure in which a seal is compressed in the axial direction of a housing, and showing an example where the faces vertical to each other in the mounting direction are compressed.
[Fig. 23] Fig. 23 is a diagrammatic sectional view showing an example of a structure in which a seal is compressed in the axial direction of a housing, and showing an example where the face of a flow regulation cylinder to which the seal is pressed is tilted.

[Fig. 24] Fig. 24 is a diagrammatic sectional view showing an example of a structure in which a seal is compressed in the axial direction of a housing, and showing an example where the face of a first bundling and fixing part to which the seal is pressed is tilted.

[Fig. 25] Fig. 25 is a diagrammatic sectional view showing an example of a structure in which a seal is compressed in the axial direction of a housing, and showing an example where both the face of a flow regulation cylinder and the face of a first bundling and fixing part to which the seal is pressed are tilted.

[Fig. 26] Fig. 26 is an enlarged sectional view of a sealing part, showing an example where the convex portion provided on the inner peripheral surface of a flow regulation cylinder has a rectangular shape.

[Fig. 27] Fig. 27 is an enlarged sectional view of a sealing part, showing an example where a tapered part is not provided in a first bundling and fixing part.

[Fig. 28] Fig. 28 is a diagrammatic vertical sectional view around a first bundling and fixing part of a cartridge type hollow-fiber membrane module of a second embodiment not falling under the scope of the present invention.

[Fig. 29] Fig. 29 is a view showing a hollow-fiber membrane module of the second embodiment where the flow regulation cylinder and the first bundling and fixing part are bonded to each other therein.

[Fig. 30] Fig. 30 is a diagrammatic vertical sectional view around a first bundling and fixing part of a cartridge type hollow-fiber membrane module of a third embodiment not falling under the scope of the present invention.

[Fig. 31] Fig. 31 is a view explaining the absence of a flow regulation cylinder in the hollow-fiber membrane module of the third embodiment.

[Fig. 32] Fig. 32 is an enlarged sectional view showing an embodiment where a hollow-fiber membrane cartridge is made to have a readily detachable sealing structure by compressing a first seal in at least a virtual axial direction of a housing body.

[Fig. 33] Fig. 33 is an enlarged sectional view showing an embodiment where the inclination α of the face to receive a first seal with respect to the horizontal direction and the inclination β of the face to receive a second seal with respect to the horizontal direction are varied.

[Fig. 34] Fig. 34 is a diagrammatic vertical sectional view of a cartridge type hollow-fiber membrane module of a fourth embodiment.

[Fig. 35] Fig. 35 is a diagrammatic sectional view of the hollow-fiber membrane cartridge in the fourth embodiment.

[Fig. 36] Fig. 36 is an A-A line sectional view of Fig. 34.

[Fig. 37] Fig. 37 is a side view of the holding part of the cartridge type hollow-fiber membrane module of Fig. 34.

[Fig. 38] Fig. 38 is an enlarged view around the holding part of the cartridge type hollow-fiber membrane module of Fig. 34.

[Fig. 39] Fig. 39 is an enlarged view around the holding part of the cartridge type hollow-fiber membrane module of Fig. 34.

[Fig. 40] Fig. 40 is an enlarged view around the holding part of the cartridge type hollow-fiber membrane module of Fig. 34.

[Fig. 41] Fig. 41 is an enlarged view of another embodiment around the holding part of a cartridge type hollow-fiber membrane module.

[Fig. 42] Fig. 42 is an enlarged view of still another embodiment around the holding part of a cartridge type hollow-fiber membrane module.

MODE FOR CARRYING OUT THE INVENTION

Hollow-fiber membrane modules according to embodiments of the present invention are explained below in detail on the basis of drawings. In the present invention, "upside" and "downside" are terms used for reasons of convenience on the basis of the state shown in the drawings; the side into which raw liquid flows is referred to as "downside" direction, and the side from which a filtrated liquid flows out is referred to as "upside" direction. Usually, the upside and downside directions for the hollow-fiber membrane module in the position during use are the same as the upside and downside directions shown in the drawings; however, in the case of a module to be laid horizontally while in use, "upside" corresponds to the first end part side, and "lower end" and "lower side" each refer to the other end of each member.

(First Embodiment)

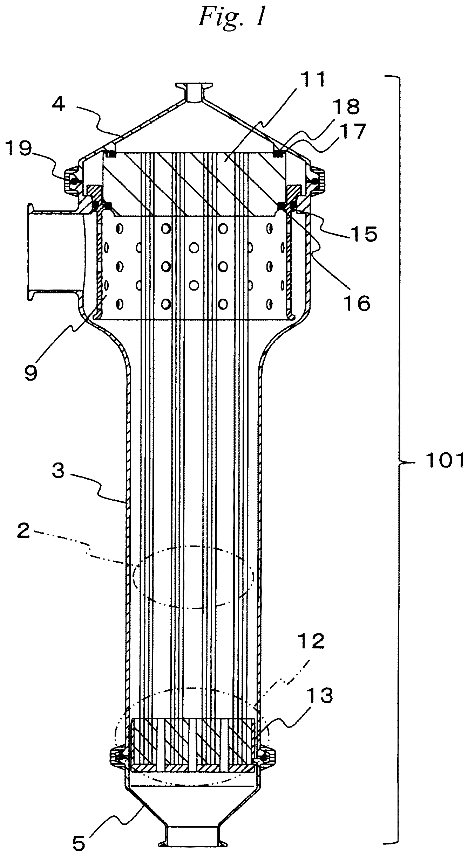

The configuration of a hollow-fiber membrane module of a first embodiment of the present invention is explained while referring to drawings. Fig. 1 is a diagrammatic vertical sectional view of a cartridge type hollow-fiber membrane module of the embodiment of the present invention. A cartridge type is described here as an example where a housing is separable from hollow-fiber membrane bundles; however, embodiments of the present invention are not limited to this case but may be any others where the first bundling and fixing part and the flow regulation cylinder, as well as the housing and the flow regulation cylinder may be liquid-tightly fixed by bonding.

In the case where the flow regulation cylinder is not fixed by bonding, the flow regulation cylinder may be easily reused and, in addition, it does not have an adhesive face and is held by a seal, and therefore has another advantage of no risk of peeling at an adhesive face.

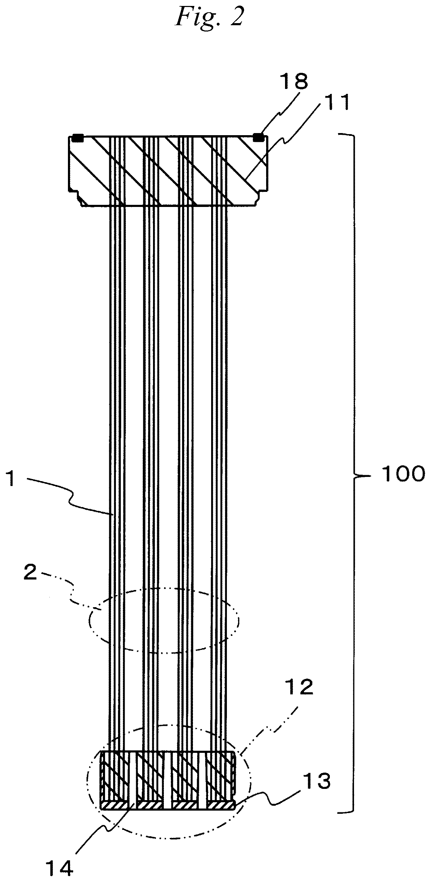

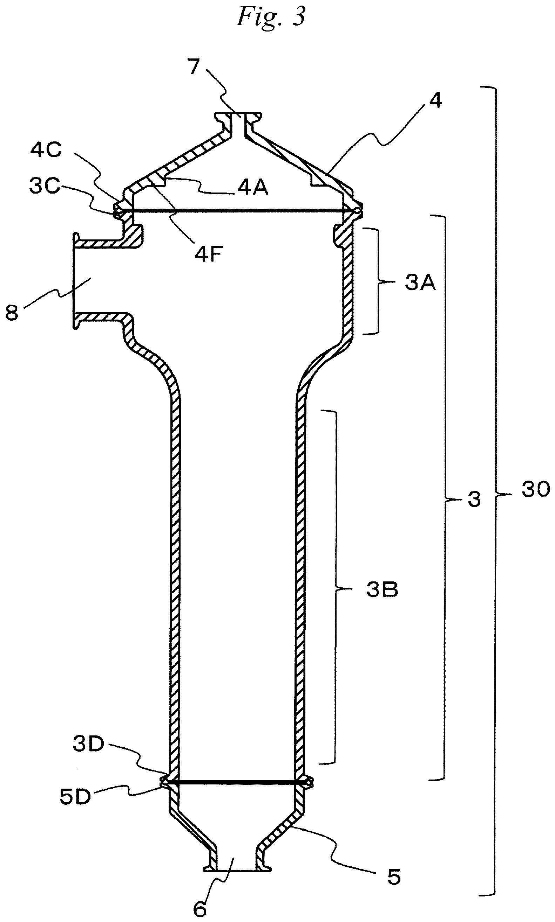

The cartridge type hollow-fiber membrane module 101 of this embodiment includes a housing 30 (see Fig. 3), a flow regulation cylinder 9, a hollow-fiber membrane bundle 2 in which a plurality of hollow-fiber membranes (see Fig. 2) are bundled and housed in the flow regulation cylinder 9, a first bundling and fixing part 11 which bundles the hollow-fiber membrane bundles 2 in a condition that the first end part thereof is kept open, a second bundling and fixing part 12 which bundles the hollow-fiber membrane bundles 2 in a condition that the second end part thereof is sealed, a first seal 15 which liquid-tightly seals between the housing 30 and the flow regulation cylinder 9, and a second seal 16 which liquid-tightly seals between the flow regulation cylinder 9 and the first bundling and fixing part 11.

<Module Structure>

A structure of the cartridge type hollow-fiber membrane module 101 is shown in Fig. 1.

The cartridge type hollow-fiber membrane module 101 includes the housing 30, the flow regulation cylinder 9, and a hollow-fiber membrane cartridge 100 housed in the flow regulation cylinder 9 as shown in Fig. 2.

<Housing>

The housing 30 is described with reference to Fig. 3.

The housing 30 includes a stepped, approximately cylindrical housing body 3 having a plurality of diameters, an upper cap 4 disposed on the upper end side of the housing body 3 to cover the opening, and a lower cap 5 disposed on the lower end side of the housing body 3 to cover the opening from downside. The upper cap 4 and the housing body 3, as well as the housing body 3 and the lower cap 5 are respectively liquid-tightly connected to each other by a gasket and a clamp (hereinafter referred to as sealing).

The housing body 3 is so designed as to have a plurality of diameters, including a large-diameter part 3A of the upper part and a small-diameter part 3B of the lower part. The large-diameter part 3A and the small-diameter part 3B are configured to have a common axis in the longitudinal direction of the housing, and the inner peripheral face of the large-diameter part 3A and the inner peripheral face of the small-diameter part 3B are taper-like connected to each other.

A raw liquid outflow port 8 (nozzle) is formed on the side surface of the large-diameter part 3A. At the upper end of the housing body 3, a flange 3C is provided, and at the lower end thereof, a flange 3D is provided, both covering the whole circumference of the housing body 3.

The upper cap 4 has, at the lower part thereof, a flange 4C having an inner diameter that is nearly the same as the inner diameter of the upper end of the housing body 3, and having a cross-sectional shape that is the same as that of the flange 3C at the upper end of the housing body 3. The diameter of the upper cap 4 reduces towards the upper end side, thereby forming a filtrated liquid outflow port 7 at the upper end of the cap. In the inner periphery on the lower end side of the upper cap 4, a stepped part 4A is formed running throughout the whole circumference thereof. In the stepped part 4A, a flat face 4F that is vertical to the axis of the longitudinal direction of the housing body 3 is formed running throughout the whole circumference thereof. In assembling the hollow-fiber membrane cartridge 100, the flat face 4F presses the gasket 18 (to be described below) at the upper end of the first bundling and fixing part 11, as in Fig. 1.

The lower cap 5 has, at the lower part thereof, a flange 5D having an inner diameter that is nearly the same as the inner diameter of the lower end of the housing body 3, and having a shape that is the same as that of the flange 3D at the lower end of the housing body 3. The diameter of the lower cap 5 reduces towards the lower end side, thereby forming a raw liquid inflow port 6.

<Flow Regulation Cylinder>

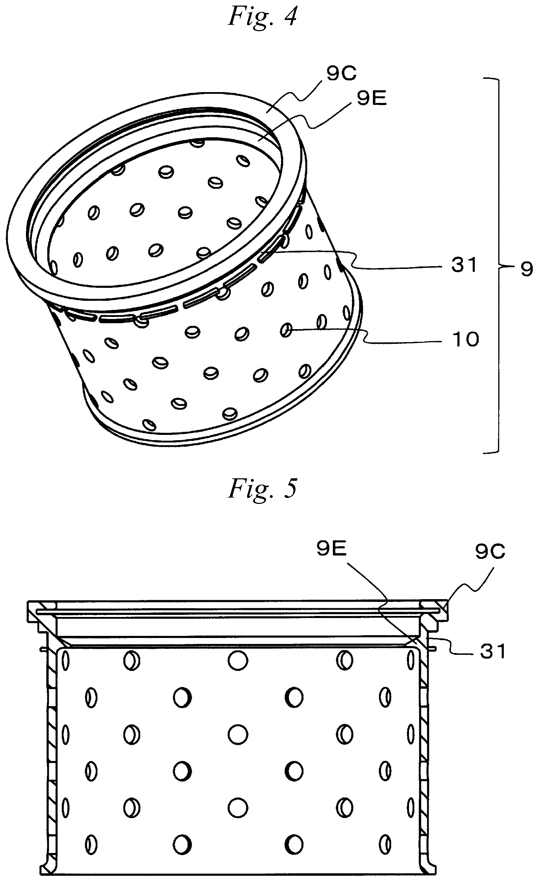

The flow regulation cylinder 9 is described with reference to Fig. 4 and Fig. 5.

The flow regulation cylinder 9 has a cylindrical shape and has a plurality of flow regulation holes 10 on the side peripheral surface. At the upper end thereof, there is provided a flange 9C, and the flange 9C is inserted between the upper end face of the housing body 3 and the lower end face of the upper cap 4 to be mounted. The flange 9C, the upper end face of the housing body 3 and the lower end face of the upper cap 4 function as a first fixing part to fix the flow regulation cylinder 9 detachably relative to the housing 30 (housing body 3). After mounted, the lower end of the flow regulation cylinder 9 is positioned lower than the raw liquid outflow port 8 of the housing body 3. In the outer peripheral side surface on the upper side than the center, an O-ring groove 31 for fitting a first seal 15 (sealant member) thereinto is provided. The flow regulation holes 10 are formed on the lower side than the O-ring groove 31. In the condition where a first seal 15 has been fitted into the O-ring groove 31, the flow regulation cylinder 9 is inserted into the housing body 3 whereby the inner peripheral face of the housing body 3 and the outer peripheral face of the flow regulation cylinder 9 are sealed by the first seal 15. Throughout the whole inner peripheral face on the upper side than the center of the flow regulation cylinder 9, a convex portion 9E having an approximately rectangular triangle cross-sectional shape is provided. The cross section of the convex portion 9E has an approximately rectangular triangle shape, having two sides of one that is parallel to the axis in the longitudinal direction of the housing body 3, and the other running through the axis in the longitudinal direction of the housing body 3 and vertical to the axis in the longitudinal direction thereof, and having still another side tilting downwardly toward the center axis in the radial direction of the housing body 3.

The shape of the flow regulation holes provided on the flow regulation cylinder is not specifically limited so far as they have an effect of regulating the flow inside the module, and a circular, oval, polygonal or slit-like shape may be preferably used. Holes having different shapes may be combined for use herein.

The configuration of the flow regulation holes is not also specially limited. The holes may be equally arranged on the inner surface of the flow regulation cylinder, or in the case where the liquid amount to be discharged out from the module is expected to be large around the nozzle on the side surface of the housing, the number of the openings of the flow regulation holes around the nozzle on the side surface of the housing may be reduced.

<Cartridge>

As shown in Fig. 2, the hollow-fiber membrane cartridge 100 includes the hollow-fiber membrane bundles 2 including a plurality of hollow-fiber membranes 1, the first bundling and fixing part 11 which bonds and fixes the hollow-fiber membrane bundles 2 on the upper end side of the hollow-fiber membrane bundles 2, and the second bundling and fixing part 12 which bonds and fixes the hollow-fiber membrane bundles 2 on the lower end side of the hollow-fiber membrane bundles 2.

<First Bundling and fixing part>

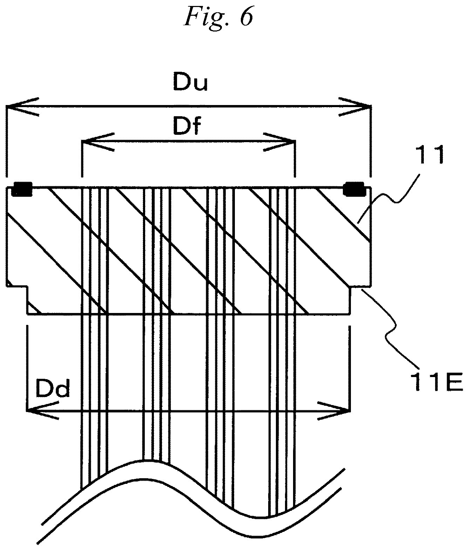

The first bundling and fixing part 11 is described with reference to Fig. 6.

On the upper end side of the hollow-fiber membrane bundles 2, the first bundling and fixing part 11 which is arranged on the upper end side of the hollow-fiber membrane cartridge 100 is formed by bonding and fixing the gap between the plurality of hollow-fiber membranes 1 constituting the hollow-fiber membrane bundles 2 with a resin. At the upper end thereof, the hollow-fiber membrane bundles 2 are bundled while the hollow-fiber membranes 1 are kept open. The first bundling and fixing part 11 is stepped and approximately columnar, and on the side surface lower than the center of the first bundling and fixing part, a stepped part 11E is provided running throughout the entire periphery thereof. This is so designed that the outer diameter in the part more upward than the stepped part 11E is larger than the outer diameter in the part more downward than the stepped part 11E.

The hollow-fiber membrane bundles 2 are formed so as to be positioned nearer to the center in the radial direction of the first bundling and fixing part 11. The outermost diameter Df of the region 32 where the hollow-fiber membrane bundles 2 exist is made smaller than the outermost diameter Du of the first bundling and fixing part 11 and smaller than the outer diameter Dd of the lower-side small-diameter part of the first bundling and fixing part 11. Accordingly, the region where the hollow-fiber membrane bundles 2 exist at the lower end of the first bundling and fixing part 11 can be made equal to or smaller than the outer diameter Dd of the lower-side small-diameter part of the first bundling and fixing part 11, and the effect of preventing the hollow-fiber membrane bundles 2 from sticking to the flow regulation holes 10 can be thereby enhanced. The hollow-fiber membrane bundles 2 are positioned in the center under the control of resin injection into the frame for forming the first bundling and fixing part, but a method where the hollow-fiber membrane bundles 2 are made to get together in the center by bundling them with a detachable tape may also be employed.

The first bundling and fixing part where the hollow-fiber membrane bundles 2 are bonded and fixed with a resin while having an open end is formed according to a method to be mentioned below. The hollow-fiber membrane bundles 2 are set in a frame after the hollow part therein has been sealed up with a small amount of resin, and a resin to form the first bundling and fixing part 11 is cast thereinto to bond and bundle the hollow-fiber membranes 1. Thus bundled, the hollow-fiber membrane bundles 2 and the frame-shaped resin formed around them are taken out of the frame, and the tip of the sealed hollow-fiber membrane bundles 2 is cut along with the resin to form the first bundling and fixing part.

<Second Bundling and Fixing Part>

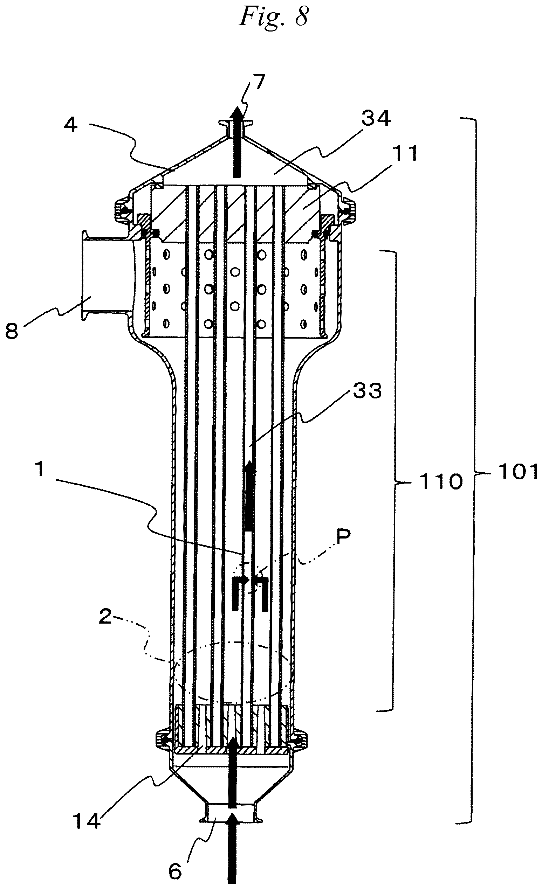

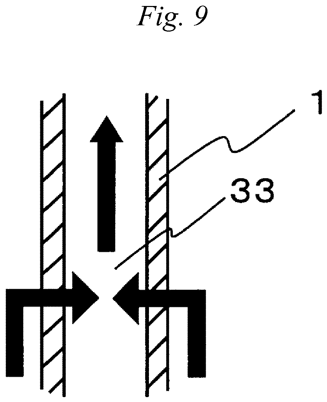

As shown in Fig. 1 and Fig. 2, on the side of the raw liquid inflow port 6 on the lower side of the housing body 3, a second bundling and fixing part 12 to be the lower end of the hollow-fiber membrane cartridge 100 is arranged. The second bundling and fixing part 12 is formed by introducing a resin into the second bundling and fixing part case 13 and burying the second end part of the hollow-fiber membrane bundles 2 each formed of a large number of hollow-fiber membranes 1 while closing the hollow part 33 (see Fig. 8 and Fig. 9) of the hollow-fiber membranes 1. The second bundling and fixing part case 13 has a cylindrical shape having a bottom as a lower portion thereof, and is so designed that the outer diameter thereof is smaller than the inner diameter of the housing body 3. The second bundling and fixing part 12 has a plurality of through-holes 14 which are nearly parallel to the hollow-fiber membrane bundles 2 and run through the second bundling and fixing part case 13 and through the resin filled inside thereof.

<Cross Flow>

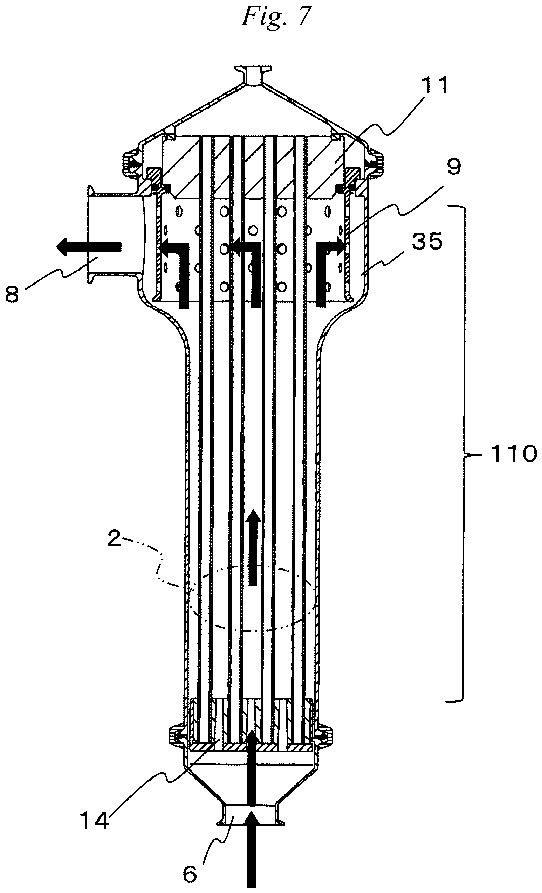

The cartridge type hollow-fiber membrane module 101 of the present invention may also be used in cross flow filtration operation. The flow mode (circulation route) of cross flow in this embodiment is described with reference to Fig. 7.

In cross flow, the raw liquid before filtration comes in through the raw liquid inflow port 6 on the lower side of the housing body 3, then passes through any of the through-holes 14 of the second bundling and fixing part 12 and the space between the second bundling and fixing part 12 and the housing body 3, and enters the filtration part 110 of the hollow-fiber membranes. The filtration part 110 indicates the space existing in the upper part above the upper end of the second bundling and fixing part 12 and in the lower part below the first bundling and fixing part 11. The raw liquid passes through the side of the hollow-fiber membrane bundles 2 in the filtration part 110, and below the first bundling and fixing part 11, it passes through the flow regulation holes 10 provided on the side surface of the flow regulation cylinder 9 from the inner peripheral side of the flow regulation cylinder 9, and flows out to the outer peripheral side of the flow regulation cylinder 9, or passes through the space between the lower end of the flow regulation cylinder 9 and the housing body 3. Subsequently, the liquid flows through the circular channel 35 between the outer periphery of the flow regulation cylinder 9 and the inner periphery of the housing body 3, toward the raw liquid outflow port 8, and flows out of the cartridge type hollow-fiber membrane module 101 via the raw liquid outflow port 8. The raw liquid having flowed out via the raw liquid outflow port 8 again runs into the housing body 3 from the raw liquid inflow port 6, via pumps etc. connected to the pipeline. The filtration system where a raw liquid is made to flow parallel to the membrane surface in the manner as above is referred to as cross flow filtration, and the flow thereof is referred to as cross flow. In this, the raw liquid runs on the membrane surface parallel thereto and therefore the suspended substance having adhered to the membrane surface is screened off by the flow of the raw liquid and is discharged out of the cartridge type hollow-fiber membrane module 101, and therefore the system is effective for preventing the suspended substance and others in the raw liquid from depositing on the membrane surface.

<Flow of Filtrated Liquid>

The flow of the filtrated liquid in this embodiment is described with reference to Fig. 8 and Fig. 9.

The raw liquid having entered the filtration part 110 is separated into "concentrated liquid" that has passed through the side of the hollow-fiber membrane bundles 2, and "filtrated liquid" that has been filtrated while introduced under external pressure into the hollow part 33 in the hollow-fiber membranes 1 constituting the hollow-fiber membrane bundles 2. As shown by the arrows in Fig. 8 and Fig. 9, the filtrated liquid runs upwardly through the hollow part 33 in the hollow-fiber membranes 1, then passes through the inside of the first bundling and fixing part 11, and enters the liquid reservoir 34 via the opening of the hollow-fiber membrane 1 that is opened at the upper end of the first bundling and fixing part 11. The liquid reservoir 34 is a space surrounded by the upper end of the first bundling and fixing part 11 and the inner surface of the upper cap 4, and the filtrated liquid having run into the liquid reservoir 34 then flows out from the cartridge type hollow-fiber membrane module 101 via the filtrated liquid outflow port 7 at the upper end of the upper cap 4.

<Method of Assembling Cartridge Type Hollow-Fiber Membrane Module>

From the opening of the upper end of the housing body 3, the flow regulation cylinder 9 (Fig. 4, Fig. 5) is arranged inside the housing body 3 (Fig. 3), and from the opening of the upper end of the flow regulation cylinder 9, the hollow-fiber membrane cartridge 100 is inserted. At this time, the first seal 15 is kept mounted to the flow regulation cylinder 9, and the second seal 16 and the gasket 18 are kept mounted to the first bundling and fixing part 11. The second bundling and fixing part case 13 positioned on the lower end of the inserted hollow-fiber membrane cartridge 100 is engaged with the lower cap 5, and the flange 3D on the lower end of the housing body 3 and the flange 5D of the lower cap 5 are clamped via a seal and are thus sealed. Since the hollow-fiber membrane bundles 2 are kept loosened, the lower end of the hollow-fiber membrane cartridge 100 protrudes out from the lower end of the housing body 3, which therefore brings about an advantage of improving the workability to mount the lower cap 5. After the lower cap 5 has been fixed by sealing, the flange 3C on the upper end of the housing body 3 and the flange 4C of the upper cap 4 are clamped via a seal and are thus sealed. At this time, the first seal 15 is compressed between the housing body 3 and the flow regulation cylinder 9, and the second seal 16 is simultaneously compressed between the flow regulation cylinder 9 and the first bundling and fixing part 11. By clamping, the housing body 3 and the flow regulation cylinder 9, and also the flow regulation cylinder 9 and the first bundling and fixing part 11 are simultaneously sealed, and thus assembling the cartridge type hollow-fiber membrane module 101 is completed.

<Assembled State of Cartridge Type Hollow-Fiber Membrane Module>

According to the above-mentioned assembling method, the flow regulation cylinder 9 is arranged inside the housing body 3. The housing body 3 has a large-diameter part 3A on the upper side thereof and has a small-diameter part 3B below the large-diameter part 3A, in which the large-diameter part 3A and the small-diameter part 3B are coaxial in the longitudinal direction of the housing body 3, and the large-diameter part 3A and the small-diameter part 3B are connected via a tapered side surface. The flow regulation cylinder 9 is so arranged as to be housed in the area upper than the tapered connection part of the large-diameter part 3A and the small-diameter part 3B, and below the flow regulation cylinder 9, the small-diameter part 3B of the housing body 3 is positioned. The flange 9C of the flow regulation cylinder 9 is sandwiched and fixed under pressure between the flange 3C of the housing body 3 and the lower flange 4C at the lower end of the upper cap 4.

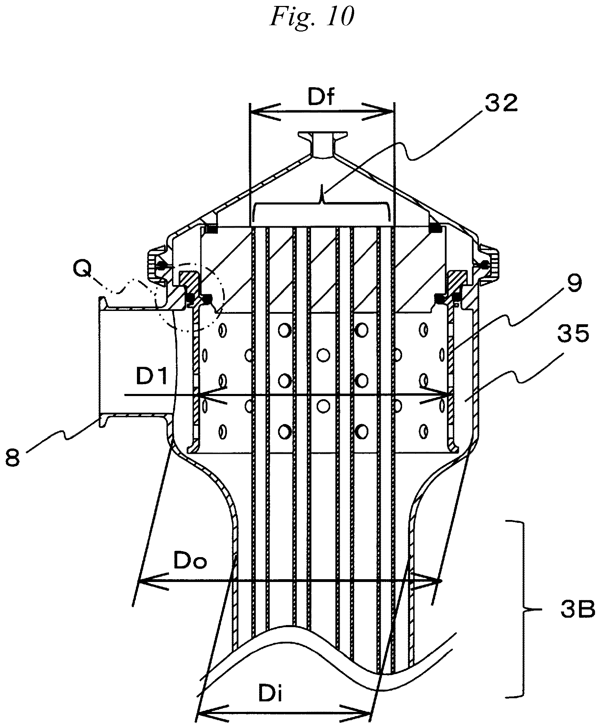

In this embodiment as shown in Fig. 10, the inner diameter Di of the small-diameter part 3B is made smaller than the inner diameter D1 of the flow regulation cylinder 9 in the part where flow regulation holes exist, and is made to be nearly the same as the outer diameter Df of the region 32 where the hollow-fiber membrane bundles 2 exist.

As described in relation to background art technique, the hollow-fiber membrane bundles 2 are, while kept loosened, mounted in the housing body 3 via the first bundling and fixing part 11 and the second bundling and fixing part 12.

The loosened hollow-fiber membranes 1 is liable to follow the flow of a raw liquid to clog the flow regulation holes 10, thereby causing an increase in the pressure drop of the cross flow of the raw liquid and an increase in the driving force for pumps and others in filtration operation. In addition, there may be another problem in that the hollow-fiber membranes 1 may be pressed against the edges of the flow regulation holes 10, thereby being damaged.

In the cartridge type hollow-fiber membrane module 101 in the present invention, the hollow-fiber membrane bundles 2 are positioned in the center of the first bundling and fixing part 11 on the upper side, and therefore as shown in Fig. 10, there can be provided a space between the outer diameter Df of the region 32 where the hollow-fiber membranes 1 exist and the inner wall of the flow regulation cylinder 9, and, as a result, the flow regulation holes 10 can be prevented from being clogged by the hollow-fiber membranes 1. When the inner diameter of the housing body 3 in the part where the nozzle 8 is arranged, that is, the inner diameter Do of the large-diameter part 3A, the inner diameter of the flow regulation cylinder 9 in the part where the nozzle 8 is arranged, namely the inner diameter D1 of the flow regulation cylinder in the range where the flow regulation holes exist thereon, and the inner diameter Di of the small-diameter part 3B satisfy a relation of Di < D1 < Do, it is possible to avoid clogging of the flow regulation holes 10 by the hollow-fiber membranes 1.

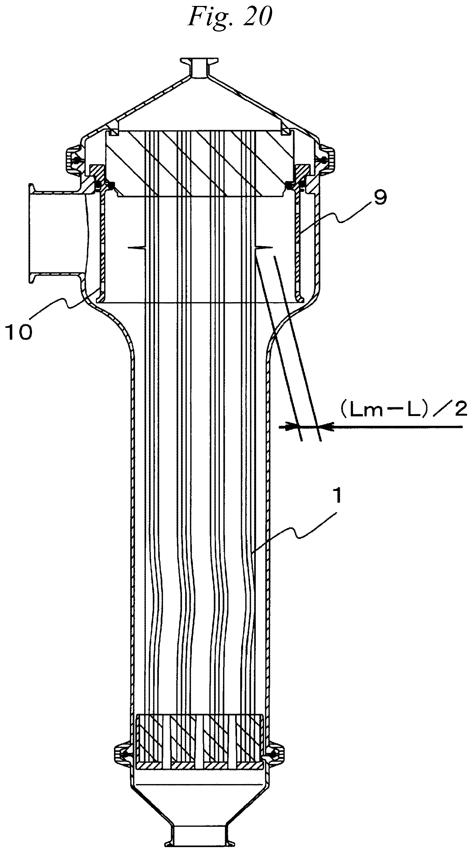

In particular, it is desirable that the space between the outer diameter Df of the region 32 where the hollow-fiber membranes 1 exist and the inner wall of the flow regulation cylinder 9 is made larger than the loosened length of the hollow-fiber membranes 1, for surely preventing the flow regulation holes 10 from being clogged by the hollow-fiber membranes 1. According to the present invention, the relation among the inner diameter D1 of the flow regulation cylinder 9, the outer diameter Df of the region 32 where the hollow-fiber membranes 1 exist, the direct distance L from the lower end of the first bundling and fixing part 11 to the upper end of the second bundling and fixing part 12, and the average length Lm of the hollow-fiber membranes 1 from the lower end of the first bundling and fixing part 11 to the upper end of the second bundling and fixing part 12 satisfies D1 -Df > (Lm -L)/2. The above-mentioned relational formula is found out as a result of assiduous investigations of other structures similar to the structure of the present embodiment. As a more preferred structure, the relation among the inner diameter D1 of the flow regulation cylinder 9, the outer diameter Df of the region 32 where the hollow-fiber membranes 1 exist, the direct distance L from the lower end of the first bundling and fixing part 11 to the upper end of the second bundling and fixing part 12, and the average length Lm of the hollow-fiber membranes 1 from the lower end of the first bundling and fixing part 11 to the upper end of the second bundling and fixing part 12 satisfies D1 -Df > Lm -L. This is because the structure satisfying the above-mentioned relational formula can surely satisfy the relation that, even when the loosening of the hollow-fiber membranes 1 is unevenly only in the range where the flow regulation holes 10 exist and the membranes are locally sucked down by the flow regulation holes 10, the hollow-fiber membranes 1 can be still prevented from being brought into contact with the inner wall of the flow regulation cylinder 9, as in Fig. 20.

Further, in the cartridge type hollow-fiber membrane module 101, the inner diameter Di of the small-diameter part 3B of the housing body 3 and the outer diameter Df of the region 32 where the hollow-fiber membranes 1 exist are made to be nearly the same as the size of the second bundling and fixing part case 13. This configuration is effective for minimizing the region where the hollow-fiber films 1 may follow liquid flow, in the range where the hollow-fiber membrane cartridge 100 having the second bundling and fixing part case 13 fixed to the lower side thereof can be inserted from the opening on the upper end of the housing body 3 to the opening on the lower end thereof. Further, in this configuration, the hollow-fiber membranes 2 are restrained by the upper side of the flow regulation cylinder 9 and the lower side of the flow regulation cylinder 9 and also by the second bundling and fixing part case 13, and the outermost diameter of the hollow-fiber membrane bundles 2 is thus maintained, and therefore, as compared with that in an already-existing configuration (Fig. 11) where the housing body 3 has only the large-diameter part 3A and the inner diameter thereof is therefore constant, the outer diameter-restraining effect for the hollow-fiber membrane bundles 2 in this embodiment is enhanced and the hollow-fiber membranes 1 may be more effectively prevented from following the raw liquid flow. On the other hand, it is known that, in a background-art technique of a case where the housing body 3 has only the small-diameter part 3B and the inner diameter thereof is constant so that the circular channel 35 between the inner surface of the housing body 3 and the outer surface of the flow regulation cylinder 9 is small, as shown in Fig. 12, the pressure drop of the cross flow in the circular channel 35 increases and the filtration performance is thereby lowered, and therefore the case is unfavorable.

In the case where the flow regulation cylinder 9 has a multistage structure and therefore has different inner diameters, the inner diameter of the flow regulation cylinder 9 indicates the smallest inner diameter in the part below the first bundling and fixing part 11.

The large-diameter part 3A and the small-diameter part 3B are taper-like connected to each other, which is therefore effective for, for example, flowing down the steam drain resulting from steam sterilization of the filtration part 110, without being kept remaining in the housing body 3.

The large-diameter part 3A and the small-diameter part 3B are not needed to be formed integrally but may be suitably divided into different members depending on the operation or working method, whereby the production efficiency for the housing body 3 as well as the handleability of the cartridge type hollow-fiber membrane module 101 can be enhanced.

<Assembled State of Sealing Part>

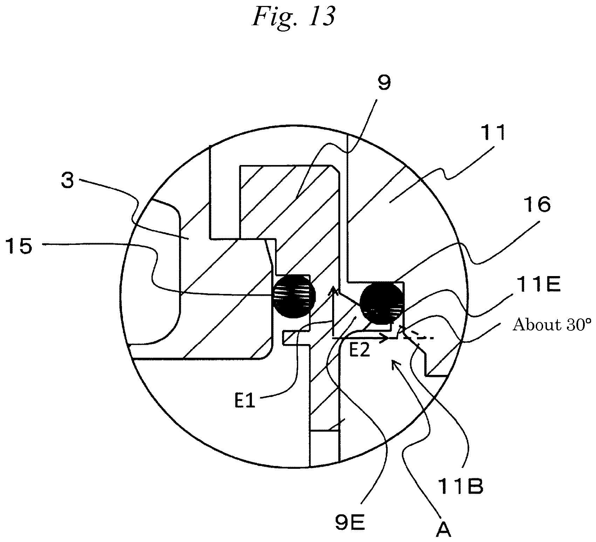

Sealing with the first seal 15 and the second seal 16 is described with reference to Fig. 13.

First, the flow regulation cylinder 9 is inserted into the housing body 3 from the upper side thereof, and mounted therein. The first seal 15 arranged in the groove at the lower-side outer periphery of the flow regulation cylinder 9 is kept in contact with the inner peripheral side surface of the housing body 3 and with the outer peripheral side surface of the flow regulation cylinder 9 to thereby seal the housing body 3 and the flow regulation cylinder 9. The first seal 15 functions as a first sealing part which liquid-tightly seals the flow regulation cylinder 9 and the housing 30 (housing body 3).

Next, the second seal 16 is mounted below the stepped part 11E of the first bundling and fixing part 11 of the hollow-fiber membrane cartridge 100, and such a hollow-fiber membrane cartridge 100 is inserted from the upper opening of the flow regulation cylinder 9 fixed to the housing body 3. When the hollow-fiber membrane cartridge 100 is inserted from above, the second seal 16 applied to the first bundling and fixing part 11 is kept in contact with the convex portion 9E provided throughout the entire inner periphery of the flow regulation cylinder 9, and the second seal 16 is thereby compressed against the housing body 3 in the axial direction (in the vertical direction in Fig. 1), whereby the flow regulation cylinder 9 and the first bundling and fixing part 11 are sealed. The second seal 16 functions as a second sealing part which liquid-tightly seals the first bundling and fixing part 11 and the flow regulation cylinder 9. The stepped part 11E of the first bundling and fixing part 11 and the convex portion 9E of the flow regulation cylinder 9 function as a second fixing part which fixes the first bundling and fixing part 11 detachably relative to the flow regulation cylinder 9.

The housing body 3 and the flow regulation cylinder 9 may be sealed by squeezing the first seal 15 in the radial direction of the housing 30 (in the horizontal direction in Fig. 1) (namely, in the condition where the first seal 15 is compressed in the radical direction of the housing 30), as in this embodiment, or may be sealed by squeezing the seal in the axial direction of the housing 30 (in the vertical direction in Fig. 1) (namely, in the condition where at least the first seal 15 is compressed in the axial direction of the housing 30). So far as the housing body 3 and the flow regulation cylinder 9 can be sealed therebetween by any means, the squeezing direction and the squeezing mechanism of the first seal 15 are not limited to the above-mentioned ones. So far as they could be sealed by engagements of the related members, the first seal 15 is not always necessary. Similarly, the flow regulation cylinder 9 and the first bundling and fixing part 11 may also be sealed by squeezing the second seal 16 in the axial direction of the flow regulation cylinder 9 (or the housing 30) like in this embodiment (namely, in the condition where at least the second seal 16 is compressed in the axial direction of the housing 30), or may also be sealed by squeezing the second seal 16 in the radial direction of the flow regulation cylinder 9 (or the housing 30) (namely, in the condition where the second seal 16 is compressed in the radical direction of the housing 30). So far as the flow regulation cylinder 9 and the first bundling and fixing part 11 can be sealed therebetween, the squeezing direction and the squeezing mechanism of the second seal 16 are not limited to the above-mentioned ones. In addition, when the first bundling and fixing part could be bonded to the inner face of the flow regulation cylinder 9, or when the two could be sealed by engagement of the related members, the second seal 16 is not always necessary.

In the cartridge type hollow-fiber membrane module 101, the hollow-fiber membrane cartridge 100 is attached to or detached from the flow regulation cylinder (cylindrical case) 9 by moving it in the virtual axial direction of the housing body 3. This example employs a configuration where the first seal 15 between the housing body 3 and the flow regulation cylinder 9 is compressed in the radical direction of the housing body 3, and the second seal 16 between the flow regulation cylinder 9 and the first bundling and fixing part 11 is compressed in at least the axial direction of the housing body 3. Accordingly, in the operation of drawing out the hollow-fiber membrane cartridge 100 in the axial direction of the housing body 3, the second seal 16 does not almost receive sliding resistance, and the hollow-fiber membrane cartridge 100 alone may be taken out with ease. This is because, in drawing out the hollow-fiber membrane cartridge 100 in the virtual axial direction of the housing body 3, the first seal 15 between the housing body 3 and the flow regulation cylinder 9 receives a friction force that is the sliding resistance of the first seal 15 put between the housing body 3 and the flow regulation cylinder 9 and therefore the flow regulation cylinder 9 could difficultly move relative to the housing body 3, while on the other hand, the second seal 16 between the flow regulation cylinder 9 and the first bundling and fixing part 11 receives a relatively small friction force.

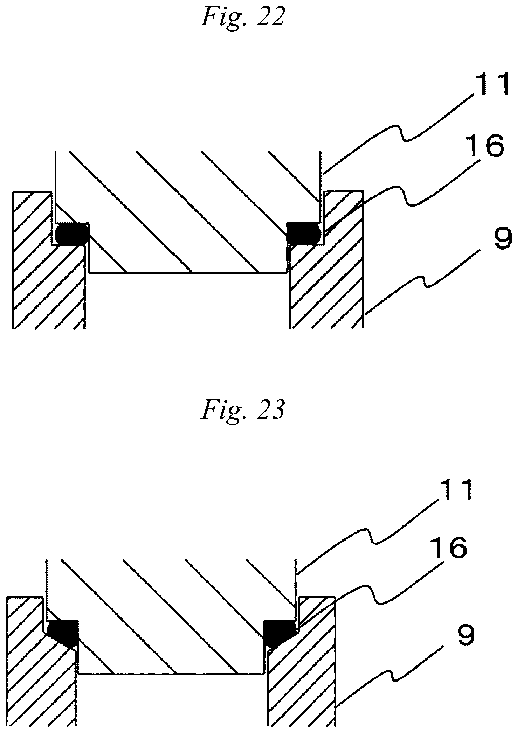

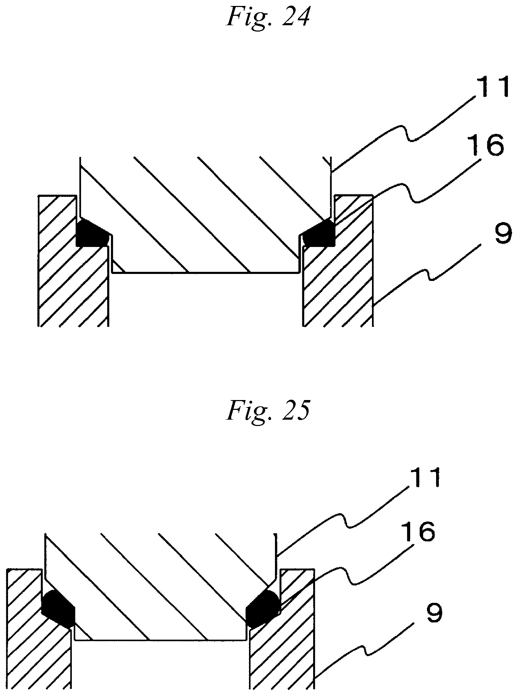

In the present invention, the phenomenon that the seal such as the first seal 15 and the second seal 16 is "compressed in the radial direction of the housing" means that the seal is pressed against the face of a cylinder whose center is the virtual axis of the housing 30, and is compressed and fixed thereto along the peripheral surface of the cylinder. The phenomenon that the seal is "compressed at least to the axial direction of the housing" is meant to indicate any other structure than the above-mentioned structure where the seal is compressed only in the radial direction of the housing. Specifically, this means a structure where, when a cylindrical case such as the hollow-fiber membrane cartridge 100 and the flow regulation cylinder 9 is mounted in the housing body 3, the seal is compressed at least in the mounting direction, and includes the cases of Fig. 22 to Fig. 25 relating to the second seal 16. For example, the phenomenon may include compression of faces that are vertical to the mounting direction as in Fig. 22. Also, the face of the flow regulation cylinder 9 that receives the second seal 16 may be a tilted face as in Fig. 23. Also, the face of the flow regulation cylinder 9 that receives the second seal 16 may be horizontal, and the face of the first bundling and fixing part 11 against which the second seal 16 is pressed may be a tilted face as in Fig. 24. Also, both the face of the first bundling and fixing part 11 against which the second seal 16 is pressed and the face of the flow regulation cylinder 9 to receive the second seal 16 may be tilted faces, and the inclination of two tilted faces may be the same or different, as in Fig. 25. When the housing 30 has a plurality of axes, the virtual axis of the housing body 3 is considered as the virtual axis of the housing 30. Such a condition shall apply also to the first seal 15.

In this embodiment, a convex portion 9E having an approximately triangular cross section is arranged throughout the entire periphery above the inner peripheral face of the flow regulation cylinder 9 as in Fig. 13, in which the cross section of the convex portion 9E is an approximately rectangular triangle having a sharp angle of about 30° (corresponding to Fig. 23), that has two sides; one being E1 that is parallel to the axis of the longitudinal direction of the housing body 3 and the other being E2 that is vertical to the axis of the longitudinal direction of the housing body 3. Since the convex portion has such a triangular cross section that downwardly inclines towards the side of the center axis of the housing body 3, the steam drain which occurs in steam sterilization may run downwards on the triangular cross section of the convex portion 9E, thereby preventing generation of an area where temperature rising by drain is slow. Preventing stagnation of steam drain could provide an effect of readily increasing the inner temperature of the cartridge type hollow-fiber membrane module 101.

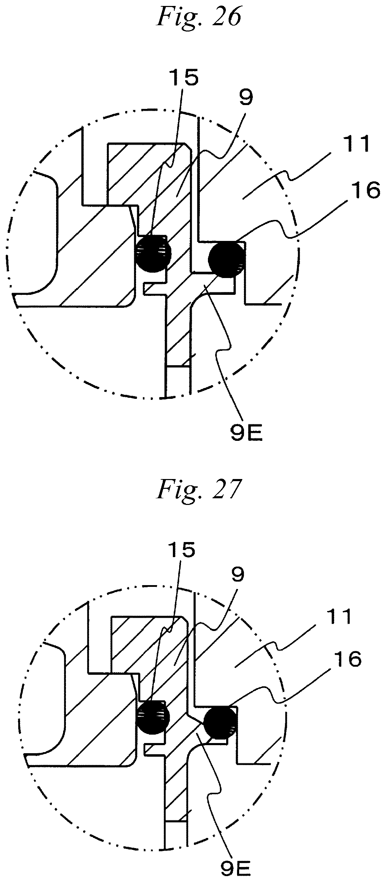

The structure where the second seal 16 between the flow regulation cylinder 9 and the first bundling and fixing part 11 is compressed at least in the virtual axial direction of the housing 30 can attain the object of this embodiment, and therefore, the convex portion 9E to be provided on the inner peripheral face of the flow regulation cylinder 9 may have a horizontal rectangular shape as in Fig. 26 (corresponding to Fig. 22). In addition, the cross section of the convex portion 9E is not limited to an approximately rectangular triangle shape or a rectangular shape, but may include any other shape such as a polygonal shape such as trapezoidal shape, semicircular shape, fan shape on which steam drain may not stay but may flow down with ease. In particular, in an approximately rectangular triangle shape and a trapezoid shape, the face to receive the seal is flat and the sealability thereof is good, and further, a trapezoid shape is more preferred since the convex portion 9E can readily secure the strength thereof against the force in the vertical direction of the housing body 3.

Heretofore, in general, a hollow-fiber membrane module is cleaned periodically after operation for a predetermined period of time for the purpose of maintaining the membrane filtration performance thereof. In addition, after membrane cleaning, the module is again sterilized to prevent contamination to thereby maintain fermentation production efficiency. With that situation, the main stream of an already-existing cartridge type hollow-fiber membrane module is one having a structure where the hollow-fiber membrane and the housing, or the hollow-fiber membrane and the flow regulation cylinder (cylindrical case) are bonded with a potting agent.

The cartridge type hollow-fiber membrane module 101 of this embodiment is so designed that the housing body 3 and the flow regulation cylinder 9 are sealed with the first seal 15, and the flow regulation cylinder 9 and the first bundling and fixing part 11 are not bonded but are sealed with the second seal 16. Even in use under a severe condition where the bonded portion between the flow regulation cylinder 9 and the first bundling and fixing part 11 in an already-existing configuration may separate from each other owing to repeated thermal expansion and contraction between the different material of the flow regulation cylinder 9 and the first bundling and fixing part 11, the module of this embodiment is not troubled by any separation of the constituent members as having a bonding-free sealing structure. In particular, the dimensions of the constituent members are so defined that the first seal 15 and the second seal 16 could be effective for sealing the members in any shape thereof at room temperature or under thermal expansion. Even when thermal expansion and contraction are repeated, the first bundling and fixing part 11 and the flow regulation cylinder 9 can be prevented from separating, and therefore the configuration is effective for preventing raw liquid leakage and hardly-cleanable gap formation. In addition, since the flow regulation cylinder 9 and the first bundling and fixing part 11 are not fixed by bonding like usually, the configuration of the present invention has another advantage that the flow regulation cylinder 9 can be reused even when the hollow-fiber membrane cartridge 100 is exchanged.

The cartridge type hollow-fiber membrane module 101 is so designed that, in assembling it, the convex portion 9E provided on the inner peripheral face of the flow regulation cylinder 9 and the tapered portion 11B of the first bundling and fixing part 11 could have nearly the same height, as in Fig. 13. In this case, the space A between the convex portion 9E and the first bundling and fixing part 11 can be large as compared with that in the case where the tapered portion 11B is omitted as in Fig. 27, and therefore in this case, during high-temperature sterilization, for example, steam in steam sterilization or hot water in hot water sterilization can readily reach the second seal 16 to thereby enhance the sterilization efficiency. Similarly, since the space A between the convex portion 9E and the first bundling and fixing part 11 can be large, the raw liquid during operation or the steam drain after sterilization can be readily discharged out to thereby prevent any insufficient heating owing to the remaining raw liquid or steam drain, that is, the configuration of the case secures high sterilization efficiency.

<Sealing Method for Housing>

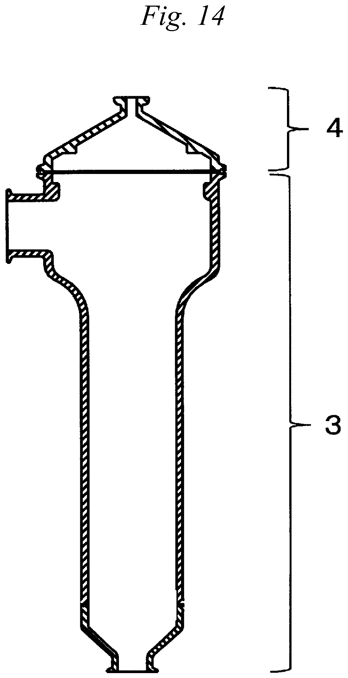

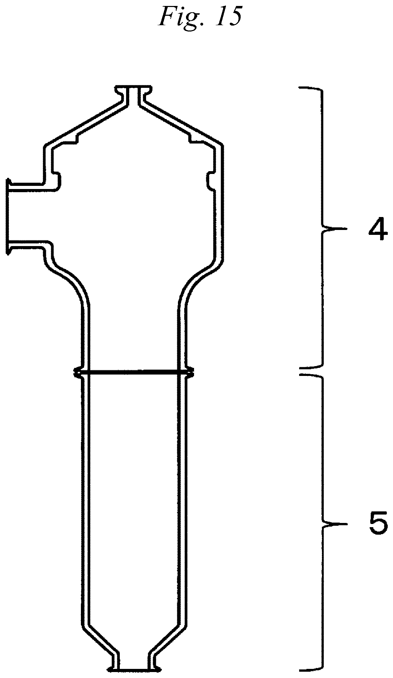

Sealing of the upper cap 4 and the housing body 3, as well as the housing body 3 and the lower cap 5 may be carried out according to a method where, while the seal 19 is kept sandwiched therebetween as shown in Fig. 1, the two are clamped from outside the connected part, or a method where the flanges are clamped by a plurality of bolts. In particular, in the case where the service period with the cartridge type hollow-fiber membrane module 101 is short, the method of detachably clamping the members in a simplified manner is preferred. On the other hand, in the case of operation under high pressure or a case of long-term operation that requires frequent exchange of hollow-fiber membrane cartridges, the method of clamping the members with a plurality of bolts is preferred since the clamped members would hardly loosen. Anyhow, in the configuration, the hollow-fiber membrane cartridge 100 is detachable relative to the housing, and the housing body 3 may be constructed as an integrated one as in Fig. 14 where any of the upper cap 4 and the lower cap 5 is welded to the housing body 3. Also, a configuration not having the housing body 3, in which both the upper cap 4 and the lower cap 5 have a cylindrical form as in Fig. 15 may be used.

<Sealing Method for Liquid Reservoir>

A gasket groove 17 is formed on the upper end face of the first bundling and fixing part 11, and a gasket 18 for sealing the liquid reservoir is mounted in a mode of internal engagement with the gasket groove 17. The gasket groove 17 is provided around the outer periphery more outer than the region 32 where the hollow-fiber membranes 1 exist, and the inner diameter of the gasket groove 17 is defined to be equal to the inner diameter of the flat face 4F (see Fig. 3) of the upper cap 4. In clamping the flange 4C of the upper cap 4 and the flange 3C of the housing body 3 as in Fig. 3, the gasket 18 is compressed by the flat face 4F of the upper cap 4 and the liquid reservoir 34 is thereby sealed. Since the inner diameter of the gasket groove 17 is provide around the outer periphery more outer than the region 32 where the hollow-fiber membranes 1 exist, all the first end parts of the hollow-fiber membrane bundles 2 that are opened are provided inside than the gasket groove 17, and the configuration therefore has an advantage that all the hollow-fiber membranes 1 can be used effectively.

<Hollow-Fiber Membranes>

The cartridge type hollow-fiber membrane module 101 of the present invention employs hollow fiber membranes as the separation membranes. In general, hollow fiber membranes are advantageous since the membranes have a larger specific surface area than flat sheet membranes and the amount of liquids which can be filtrated therewith per unit time period is large. With respect to the structures of hollow fiber membranes, there are, for example, a symmetric membrane which has an even pore diameter throughout, an asymmetric membrane in which the pore diameter changes in the membrane thickness direction, and a composite membrane which includes a supporting layer for retaining strength and a separation functional layer for separating a target substance.

The average pore diameter of the hollow fiber membranes may be suitably selected in accordance with the substance to be separated. In the case where the membranes are for separating microorganisms such as bacteria and funguses, or animal cells, it is preferable that the average pore diameter of the hollow fiber membranes is 10 nm to 220 nm. In case where the average pore diameter thereof is less than 10 nm, the membranes have too low water permeability. In case where the average pore diameter thereof exceeds 220 nm, there is a concern that microorganisms and the like might leak out. The term "average pore diameter" in the present invention means the pore diameter of the dense layer which has the smallest pore diameter.

The material of the separation membranes is not particularly limited. For example, the separation membranes can include a fluororesin such as polytetrafluoroethylene, poly(vinylidene fluoride), poly(vinyl fluoride), a tetrafluoroethylene/hexafluoropropylene copolymer, and an ethylene/tetrafluoroethylene copolymer; a cellulose ester such as cellulose acetate, cellulose acetate propionate, and cellulose acetate butyrate; a polysulfone-based resin such as a polysulfone and a polyether sulfone; or a resin such as polyacrylonitrile, a polyimide, and polypropylene. In particular, separation membranes including a fluororesin or a polysulfone-based resin are high in heat resistance, physical strength, and chemical durability and are hence suitable for use in cartridge type hollow-fiber membrane modules.

The hollow fiber membranes may contain a hydrophilic resin in addition to the fluororesin or polysulfone-based resin. With the hydrophilic resin, the separation membranes can be made to have enhanced hydrophilicity and improved water permeability. The hydrophilic resin may be any resin which is capable of imparting hydrophilicity to the separation membranes, and is not limited to specific compounds. For example, cellulose esters, vinyl esters of fatty acids, vinylpyrrolidone, ethylene oxide, propylene oxide, poly(methacrylic ester)-based resins, poly(acrylic ester)-based resins, and the like are suitable for use.

When a hollow-fiber membrane cartridge is produced, hollow fiber membranes are packed into end caps, into which a resin is injected to fix them. The injection and fixation operation is referred to as potting, and the resin for use for the potting is referred to as a potting material. Before potting, the hollow fiber membranes are dried beforehand from the standpoint of problems concerning handling and adhesion. However, many kinds of hollow fiber membranes have a problem in that the membranes contract upon drying to decrease in water permeability. Because of this, hollow fiber membranes which underwent immersion in an aqueous glycerin solution and then drying, are used. In cases when hollow fiber membranes which have been immersed in an aqueous glycerin solution are dried, the membranes can be prevented from contracting upon drying because the glycerin remains in the pores. The membranes can be made to recover the water permeability by thereafter performing an immersion treatment with a solvent such as ethanol.

The cartridge type hollow-fiber membrane module can be used after sterilized with steam. However, some hollow fiber membranes may contract upon steam sterilization, depending on the material thereof. There is hence a concern that in cases when steam sterilization is performed after module production, the hollow-fiber membranes might rupture due to the contraction thereof or due to the separation thereof from the potting resin. It is therefore desirable that the hollow fiber membranes are subjected beforehand to a steam treatment to cause the membranes to contract, and thereafter used for module production. The pretreatment temperature for contraction is preferably higher than the actual steam sterilization temperature.

The above-mentioned hollow-fiber membranes are applicable to any of external-pressure type hollow-fiber membrane modules where filtration is carried out by applying pressure from outside the membranes and internal-pressure type hollow-fiber membrane modules where filtration is carried out by applying pressure from inside the membranes. In this embodiment, preferred are external-pressure type hollow-fiber membranes.

<Material of Housing and Flow Regulation Cylinder>

The material of the housing to be used in the cartridge type hollow-fiber membrane module is not particularly limited so long as the material satisfies heat resistance, chemical durability, etc. Examples thereof include polysulfone-based resins, fluororesins such as polytetrafluoroethylene and perfluoroalkoxyfluororesins, polycarbonates, polypropylene, polymethylpentene, polyphenylene sulfide, polyether ketones, stainless steel, and aluminum. Meanwhile, the materials of the flow regulation cylinder and the second bundling and fixing part case 13 for use in the cartridge type hollow-fiber membrane module are not particularly limited, and can be selected, for example, from the same materials as those for the housing.

<Material of Bundling and Fixing Part>

The type of the potting resin to form the first bundling and fixing part 11 and the second bundling and fixing part 12 of the cartridge type hollow-fiber membrane module 101 is not particularly limited so long as the material satisfies adhesion strength to adherends, heat resistance, chemical durability, etc. For example, epoxy resin and polyurethane resin are usable. Most epoxy resin and polyurethane resin are excellent in adhesiveness to hollow-fiber membranes, heat resistance and chemical durability, and are favorably used as the potting resin for bundling and fixing the hollow-fiber membranes in the cartridge type hollow-fiber membrane module of this embodiment.

<Seal>

The material of the seal such as the O-ring and the gasket for use in the cartridge type hollow-fiber membrane module is not particularly limited so long as the material satisfies heat resistance, chemical durability, etc. For example, fluororubber, silicone rubber, ethylene/propylene/diene rubber (EPDM) and the like are usable.

In particular, since an O-ring is used for the first seal 15 and the second seal 16, the squeeze rate thereof is, in general, preferably 8% or more and 30% or less.

In this embodiment, the first bundling and fixing part 11 is not directly bonded to the flow regulation cylinder (cylindrical case) 9 but is sealed with the first seal 15, as shown in Fig. 1. Accordingly, this embodiment is free from the problem with an already-existing cartridge type hollow-fiber membrane module in which the flow regulation cylinder 9 peels away from the first bundling and fixing part 11 by heat treatment to cause leakage of raw liquid toward the filtrated liquid side and contamination. It is known that the first bundling and fixing part 11 undergoes repeated expansion and contraction during steam sterilization, during continuous operation for filtration of fermentation culture and the like or during cleaning, depending on the operating temperature. Similarly, the flow regulation cylinder 9 and the housing body 3 also undergo repeated expansion and contraction depending on the operating temperature. The first seal 15 which seals between the housing body 3 and the flow regulation cylinder 9, and the second seal 16 which seals between the flow regulation cylinder 9 and the first bundling and fixing part 11 are preferably so designed that the squeeze rate thereof could be 8% or more and 30% or less in the entire operating temperature range for the cartridge type hollow-fiber membrane module 101. For the same reason, the difference in the linear expansion coefficient among the housing body 3, the flow regulation cylinder 9 and the first bundling and fixing part 11 is preferably smaller, and for example, it is desirable that the housing body 3 and the flow regulation cylinder 9 are made of the same material. Even in the case where it is difficult to produce a plurality of members such as the flow regulation cylinder 9 and the first bundling and fixing part 11 to be sealed together using the same material, the wire diameter of the first seal 15 and the second seal 16 is preferably larger so that the range of the absolute value of the O-ring squeeze amount (unit: mm or the like) corresponding to the range of the squeeze rate 8 to 30% could be large. However, when the wire diameter of the O-ring is large, the sealing performance could improve but the area of the surface that faces a plurality of members to be sealed therewith may increase and therefore the friction force may therefore increase to provide a risk of worsening the operability in assembling and dissembling.

<Filtration Method with Cartridge Type Hollow-Fiber Membrane Module>

In this embodiment, cross flow filtration is employed, but dead-end filtration of entirely filtrating raw liquid may also be employed. This embodiment is advantageous in that it is applicable to dead-end filtration of entirely filtrating raw liquid by closing the raw liquid outflow port 8. In addition, by introducing air from the raw liquid inflow port 6 for air scrubbing, the hollow-fiber membranes may be cleaning by shaking, and the regeneration efficiency for the hollow-fiber membrane cartridge is good. In this case, the introduced air is discharged out through the raw liquid outflow port 8. Further, backpressure cleaning liquid may be fed from the filtrated liquid outflow port 7 to thereby make the liquid run through the outside from inside the hollow-fiber membranes for backpressure washing of the hollow-fiber membranes.

<Steam Sterilization Method for Cartridge type Hollow-Fiber Membrane Module>

In the case where the cartridge type hollow-fiber membrane module is used in applications such as fermentation, steam sterilization is necessary. For discharging the steam drain to be generated during steam sterilization, in general, steam is applied from the upper direction toward the lower direction of piping. In the case where the region of the raw liquid side of the cartridge type hollow-fiber membrane module 101 is subjected to steam sterilization, steam may be fed from the raw liquid outflow port 8 and steam drain may be discharged out from the raw liquid inflow port 6. In the case where the region of the filtrated liquid side of the cartridge type hollow-fiber membrane module 101 is subjected to steam sterilization, steam may be fed from the filtrated liquid outflow port 7, or steam may be fed from the raw liquid outflow port 8 and then allowed to pass through hollow-fiber membranes 1 so that the steam may be applied to the filtrated liquid side of the module. The generated steam drain is discharged out from the raw liquid inflow port 6. At this time, the through-holes 14 formed in the second bundling and fixing part also play a role of steam drain discharge port.

(Second Embodiment - not falling under the scope of the present invention)

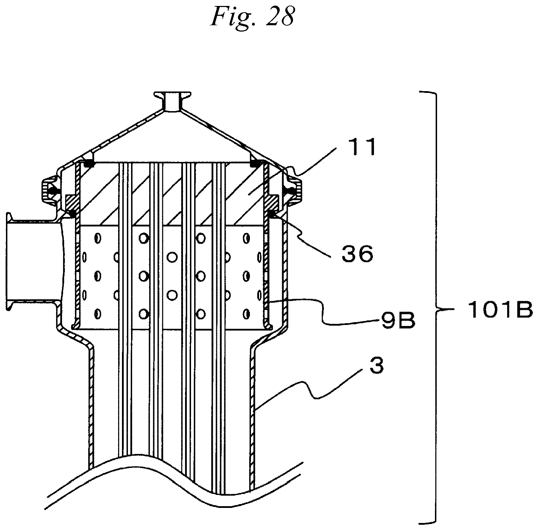

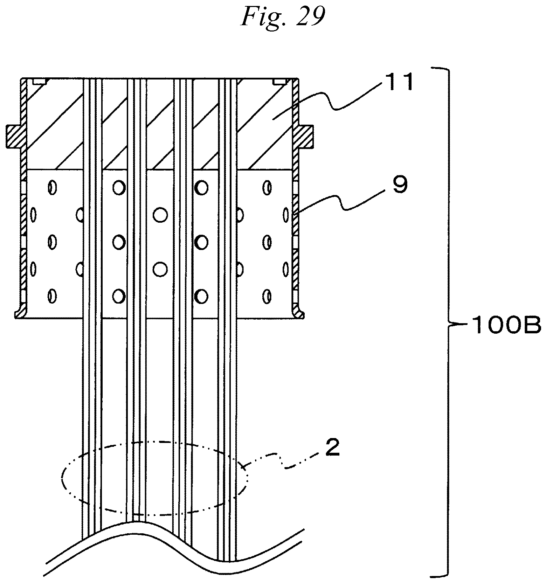

The configuration of a cartridge type hollow-fiber membrane module 101B according to a second embodiment not falling under the scope of the present invention is explained with reference to Fig. 28 and Fig. 29.
Fig. 28 is a diagrammatic vertical sectional view around the first bundling and fixing part 11 of the cartridge type hollow-fiber membrane module 101B of the second embodiment. Differing from that in the first embodiment, the inner periphery of the flow regulation cylinder (cylindrical case) 9B and the outer periphery of the first bundling and fixing part 11 are fixed by bonding in this configuration. Also differing from that of the first embodiment, this module can be used in a usage environment in a range not causing any excessive peeling to provide leakage on the raw liquid side and the filtrated liquid side, such as hot water sterilization or gas sterilization. Unless otherwise specifically referred to hereinunder, the same configuration as that of the cartridge type hollow-fiber membrane module 101 of the first embodiment is applicable to the configuration of the cartridge type hollow-fiber membrane module 101B. The members having the same function as that of the members described in the first embodiment are given the same signs herein, and describing them is omitted.
In the second embodiment, the flow regulation cylinder 9B and the first bundling and fixing part 11 are bonded, and therefore the hollow-fiber membrane cartridge 100B (Fig. 29) includes the flow regulation cylinder 9B. Accordingly, between the flow regulation cylinder 9B having the outermost part of the detachable hollow-fiber membrane cartridge 100B and the housing body 3 to be the housing, a seal 36 is compressed at least in the axial direction of the housing body 3. In the configuration where the seal 36 is compressed in the radial direction of the housing body 3, sliding friction resistance may occur in attaching or detaching the hollow-fiber membrane cartridge 100B, but in this embodiment, since the seal is compressed in the virtual axial direction of the housing body 3, the sliding frictional resistance to occur in attaching or detaching the hollow-fiber membrane cartridge 100B is small, and this embodiment therefore has an advantage of easy operation. In this case, when the face to receive the seal 36 is tilted, the steam drain dischargeability may be enhanced.

(Third Embodiment - not falling under the scope of the present invention)

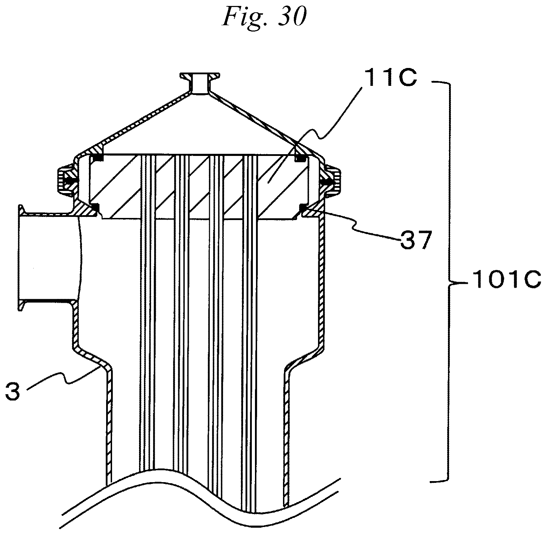

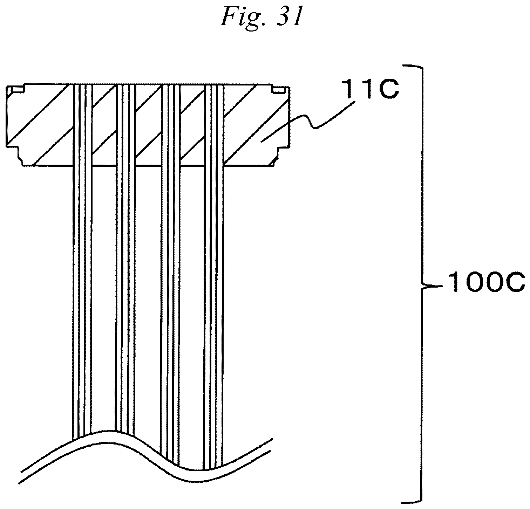

The configuration of a cartridge type hollow-fiber membrane module 101C according to a third embodiment not falling under the scope of the present invention is explained with reference to Fig. 30 and Fig. 31.

Fig. 30 is a diagrammatic vertical sectional view around the first bundling and fixing part 11C of the cartridge type hollow-fiber membrane module 101C of the third embodiment. Differing from that in the first embodiment, this configuration does not have the flow regulation cylinder 9. Unless otherwise specifically referred to hereinunder, the same configuration as that of the cartridge type hollow-fiber membrane module 101 of the first embodiment is applicable to the configuration of the cartridge type hollow-fiber membrane module 101C. The members having the same function as that of the members described in the first embodiment are given the same signs herein, and describing them is omitted.

The cartridge type hollow-fiber membrane module 101C of the third embodiment has nearly the same configuration as that of the module 101 of the first embodiment except that the former does not have the flow regulation cylinder 9. Accordingly, between the first bundling and fixing part 11C having the outermost part of the detachable hollow-fiber membrane cartridge 100C and the housing body 3 to be the housing, a seal 37 is compressed at least in the virtual axial direction of the housing body 3. In the configuration where the seal 37 is compressed in the radial direction of the housing body 3, sliding friction resistance may occur in attaching or detaching the hollow-fiber membrane cartridge 100C, but in this embodiment, since the seal is compressed in the axial direction of the housing body 3, the sliding frictional resistance to occur in attaching or detaching the hollow-fiber membrane cartridge 100C is small, and this embodiment therefore has an advantage of easy operation. Like in the first embodiment and the second embodiment, when the face to receive the seal 37 is tilted, the steam drain dischargeability may be enhanced.

(Fourth Embodiment)

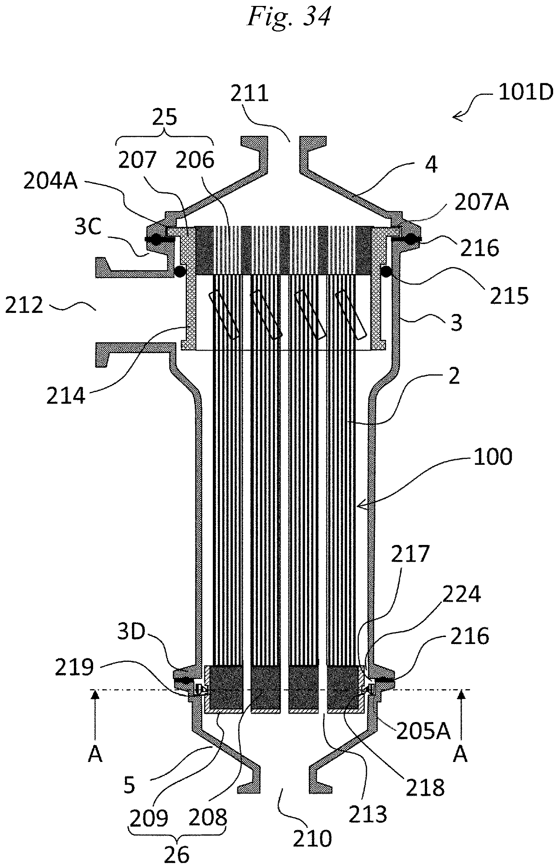

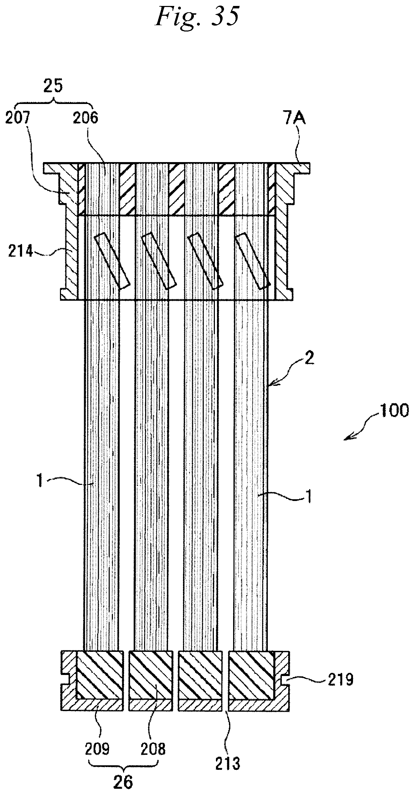

The configuration of a cartridge type hollow-fiber membrane module according to a fourth embodiment is explained with reference to drawings. Fig. 34 is a diagrammatic vertical sectional view of a cartridge type hollow-fiber membrane module of the fourth embodiment of the present invention, and Fig. 35 is a diagrammatic sectional view of the hollow-fiber membrane cartridge.

The cartridge type hollow-fiber membrane module of the fourth embodiment of the present invention includes a housing, a plurality of hollow fiber membranes housed in the housing, a first potting part which bundles first end parts of the hollow fiber membranes in a condition that the first end parts thereof are kept open, a second potting part which bundles second end parts of the hollow fiber membranes in a condition that the second end parts thereof are sealed, a fixing part which fixes the first potting part detachably relative to the housing, a sealing part which liquid-tightly seals between the first potting part and the housing, and a holding part which holds the second potting part so that the second potting part is detachable relative to the housing and so that liquid is capable of passing through between the second potting part and the housing.

Employing the hollow-fiber membrane module having the configuration as above is advantageous in that the steam drain dischargeability in steam sterilization is further improved in the second potting part, that a suspended substance can be prevented from depositing, and that a suspended substance can also be prevented from depositing on the hollow-fiber membrane bundles since the hollow-fiber membrane bundles themselves are shaken. Here, when the second potting part flows up during cross flow filtration, the hollow-fiber membrane bundles 2 that have been kept loosened would be furthermore loosened, but like in the present invention, when the configuration has a gap between the inner face of the flow regulation cylinder and the outermost diameter of the hollow-fiber membrane bundle existing region, it is possible to avoid the problem that the hollow-fiber membranes 1 may clog the flow regulation holes 10.

The hollow-fiber membrane modules shown hereinunder as embodiments of the present invention are all external-pressure type ones. Here, external-pressure type is meant to indicate a filtration system where raw liquid is fed from outside the hollow-fiber membranes and is filtrated toward the inside of the hollow-fiber membranes (toward the hollows).

<Housing>

The housing is for disposing a hollow-fiber membrane cartridge 100 therein, and includes a hollow cylindrical housing body 3, and an upper cap 4 and a lower cap 5 which are provided to both ends of the housing body 3.

As shown in Fig. 34, an upper cap 4 having a filtrated liquid outflow port 211 and a lower cap 5 having a raw liquid inflow port 210 are liquid- and air-tightly connected respectively to the upper part and the lower part of the housing body 3. Examples of the method for connecting the upper cap 4 and the lower cap 5 to the housing body 3 include a method in which gaskets 216 are used and the caps are fixed with clamps or the like, as shown, for example, in Fig. 34.

The housing body 3 has flanges 3C and 3D on the upper and lower ends thereof over the whole circumference of the housing body 3. A raw liquid outflow port 212 is provided to a lateral part of the housing body 3 in a position near the filtrated liquid outflow port 211.

The upper cap 4 has an inner diameter substantially equal to the inner diameter of the housing body 3, and the upper end side thereof is tapered to form the filtrated liquid outflow port 211. The upper cap 4 has, in a lower end side thereof, a stepped part 204A formed over the whole circumference of the upper cap 4 to form a groove when connected to the housing body 3. When the housing body 3 is connected to the upper cap 4, the lower end part of the upper cap 4 is in contact with the flange 3C of the housing body 3 to form the groove (fixing part), and a flange 207A of the first potting part 25, which will be described later, is fixed with that groove (fixing part).

The lower cap 5 has an inner diameter substantially equal to the inner diameter of the housing body 3, and the lower end side thereof is tapered to form a raw liquid inflow port 210. The lower cap 5 has, in an upper end side thereof, a plurality of steps 205A (four steps in the fourth embodiment) at intervals to form depressions when connected to the housing body 3. When the housing body 3 is connected to the lower cap 5, the upper end part of the lower cap 5 is in contact with the flange 3D of the housing body 3 to thereby form first holding grooves 217 between the upper surface of the lower cap 5 and the lower surface of the flange 3D of the housing body 3. Pins (holding part) 218 are inserted into the first holding grooves 217.

<Hollow-fiber Membrane Module>

The cartridge type hollow-fiber membrane module 101D includes a hollow-fiber membrane cartridge 100, which is shown in Fig. 35, mounted in the housing. The hollow-fiber membrane cartridge 100 includes a plurality of hollow fiber membranes 1, and has a first potting part 25 disposed in the housing on the side facing the filtrated liquid outflow port 211 and a second potting part 26 disposed in the housing on the side facing the raw liquid inflow port 210. The first potting part 25 and the second potting part 26 correspond to the first bundling and fixing part 11 and the second bundling and fixing part 12, respectively, in the first to third embodiments.

<First Potting Part>

The first potting part 25, which is an upper-end-side portion of the hollow-fiber membrane cartridge 100 and is disposed in the housing on the side facing the filtrated liquid outflow port 211, is configured by bonding, with an adhesive or the like, the first end parts of hollow-fiber membrane bundles 2 including a large number of hollow fiber membranes 1, thereby forming a first bonded part 206, and disposing the first bonded part 206 in a first end part case 207. In these hollow-fiber membrane bundles 2, the hollow fiber membranes 1 are bundled in the condition that the upper end faces thereof are kept open. The first end part case 207 is cylindrical, and has, at the upper end part thereof, a flange 207A formed over the whole circumference of the first end part case 207. By inserting the flange 207A of the first end part case 207 into the groove (fixing part) formed when the housing body 3 is connected to the upper cap 4, the first potting part 25 is liquid- and air-tightly fixed to the upper end part of the housing body 3.

Raw liquid which has been fed from outside the hollow fiber membranes 1 permeates the hollow fiber membranes 1, and the resultant filtrated liquid passes through the hollow parts of the hollow fiber membranes 1 and is discharged through the openings of the hollow fiber membranes 1.

<Flow Regulation Cylinder>

A cylindrical flow regulation cylinder 214 having a plurality of slits extending in the axial direction is provided to the first end part case 207 on the lower side thereof (i.e., on the side facing the raw liquid inflow port 210). Liquids can pass through the flow regulation cylinder 214 via the slits. The flow regulation cylinder 214 is provided in the housing at a position near the raw liquid outflow port 212, for the purpose of preventing the treated raw liquid from channeling. In the case where the cartridge type hollow-fiber membrane module 101D is to be sterilized with steam, it is preferable that a gap for steam drain discharge is formed also between the flow regulation cylinder and the housing body 3 in order to prevent steam drain stagnation.

< Second Potting Part>

The second potting part 26, which is a lower-end-side portion of the hollow-fiber membrane cartridge 100, is disposed in the housing on the side facing the raw liquid inflow port 210. The second potting part 26, where the second end parts of the hollow fiber membranes 1 are present, is configured by bonding, with an adhesive or the like, the hollow-fiber membrane bundles 2 including a large number of hollow fiber membranes 1, thereby forming a second bonded part 208, and disposing the second bonded part 208 in a second end part case 209. The hollow parts of the hollow fiber membranes 1 are sealed with the adhesive and are in the state of being unopen. The second end part case 209 has a cylindrical shape having a bottom as a lower portion thereof, and is configured so as to have an outer diameter smaller than the inner diameter of the housing. The bottom of the second end part case 209 has through-holes 213, therefore playing a role of a raw liquid channel. The second end part case 209 corresponds to the second bundling and fixing part case 13 in the first to third embodiments.

In the cartridge type hollow-fiber membrane module of the present invention, the second potting part 26 is held by the holding part and the hollow fiber membranes can be inhibited from being lifted up during cross flow filtration or air scrubbing.

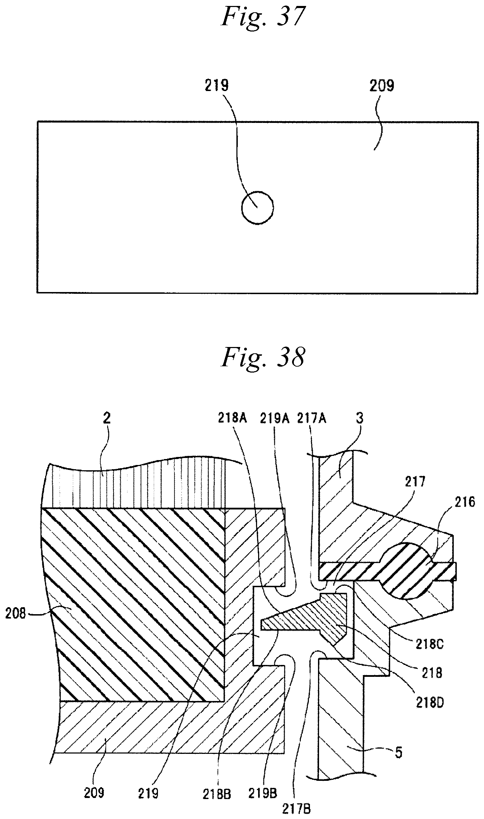

In the second end part case 209, recess-shaped second holding grooves 219 are formed on the outer peripheral surface thereof at positions which face the first holding grooves 217 formed on the housing (see Fig. 37). Since the first holding grooves 217 are provided to the housing, pins 218 can be inserted as the holding part into the spaces which are formed when the second holding grooves 219 are positioned so as to face the first holding grooves 217 (see Fig. 38). By such a configuration, the position of the second end part case 209 can be kept within a certain range by the pins 218 and, hence, the hollow fiber membranes can be inhibited from being lifted up during cross flow filtration or air scrubbing.

In this embodiment, the second end part case 209 is used. However, there is no need of always using the second end part case 209, and the second potting part 26 can be formed with the second bonded part 208 alone. In this case, second holding grooves 219 are formed on the outer peripheral surface of the second bonded part 208.

<Configuration of the Pins>

The pins 218 each have, as shown in Fig. 38, a pin inner-side upper surface 218A and a pin inner-side lower surface 218B, which are disposed on the side facing the hollow-fiber membrane cartridge 100, and a pin outer-side upper surface 218C and a pin outer-side lower surface 218D, which are disposed on the housing side.

The pin inner-side upper surface 218A has an inclined surface which descends towards the tip. The pin inner-side lower surface 218B and the pin outer-side upper surface 218C have flat surfaces which are parallel respectively with the bottom surface (bottom) 219B of the second holding groove 219 and the ceiling surface (ceiling) 217A of the first holding groove 217. The pin outer-side lower surface 218D is formed so as to have an acute-angle shape with a tapered tip.

<Attachment of Hollow-fiber Membrane Cartridge 100 to Housing>

When the hollow-fiber membrane cartridge 100 is mounted in the housing, the hollow-fiber membrane cartridge 100 is first inserted into the housing body 3, and the flange 207A of the first end part case 207 of the first potting part 25 is made to be held by the upper surface of the flange 3C of the housing body 3. Next, the lower end part of the upper cap 4 is kept in contact with the flange 3C of the housing body 3, with a gasket 216 interposed therebetween, and is fixed with clamps or the like.

Subsequently, pins 218 are inserted into the second holding grooves 219 of the second end part case 209 of the second potting part 26 of the hollow-fiber membrane cartridge 100, and the lower cap 5 is connected. For the connection, the same method as for the upper cap 4 is used. Namely, the upper end part of the lower cap 5 is kept in contact with the flange 3D of the housing body 3, with a gasket 216 interposed therebetween, and is fixed with clamps or the like.

In the cartridge type hollow-fiber membrane module 101D thus assembled, the second potting part 26 can be held since the pins 218 are inserted into the spaces formed by both the first holding grooves 217 of the housing and the second holding grooves 219 of the second end part case 209 of the second potting part 26 (see Fig. 38). In case where there is only one holding portion, the pin 218 is prone to fall off due to hydraulic pressure during cross flow filtration or air scrubbing. It is therefore preferred to dispose pins 218 in two or more places (four places in this embodiment).

<Sealing Part>

In the cartridge type hollow-fiber membrane module 101D, a sealing part is provided between the first potting part 25 and the housing and, hence, the raw liquid side and the filtrated liquid side are liquid- and air-tightly separated from each other. By disposing a seal such as an O-ring 215 and a gasket between the first potting part 25 and the housing body 3 as shown in Fig. 34, the raw liquid side and the filtrated liquid side can be liquid- and air-tightly separated from each other. Although the materials of the O-ring and gasket are not particularly limited, it is more preferred to use materials having excellent heat resistance and high resistance to acids, alkalis, chlorine, etc. Examples of such materials include fluororubbers, silicone rubbers, and ethylene/propylene/diene rubbers (EPDM).

In the case of sterilizing the cartridge type hollow-fiber membrane module 101D with steam, steam is fed through the raw liquid outflow port 212 and the resultant steam drain is discharged through the raw liquid inflow port 210. However, in case where there are upward spaces in an upper part of the module, air stagnation may occur to inhibit the module from being heated to a sufficiently high temperature, resulting in a sterilization failure. It is therefore preferable that an O-ring 215 is disposed between the first potting part 25 and the housing body 3 as shown in the figure, thereby diminishing spaces which extend upward beyond the level of the steam feed part.

<Gap between Second Potting Part and Housing>

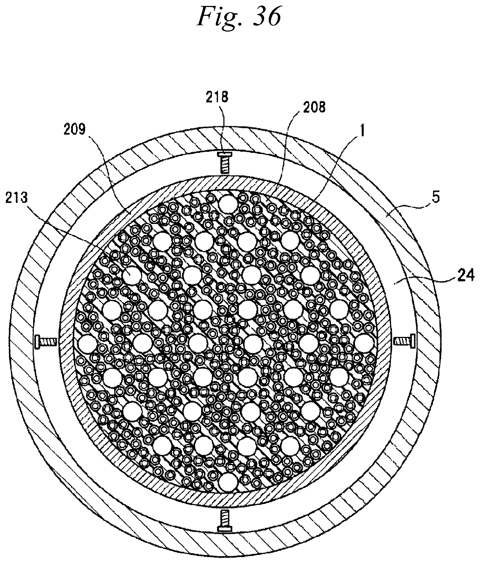

Fig. 36 is an A-A line sectional view of Fig. 34.
In the case where the cartridge type hollow-fiber membrane module 101D is to be subjected to steam sterilization, it is preferred to provide a gap 224 between the second potting part 26 and the housing (i.e., the housing body 3 and the lower cap 5) as shown in Fig. 34 and Fig. 36. By providing the gap 224, the space between the second potting part 26 and the housing can be rendered liquid-passable and the steam drain which has been generated during steam sterilization can be discharged through the gap 224. The gap 224 can be made to have a desired dimension by controlling the outer diameter of the second end part case 209 and the inner diameter of the housing. From the standpoint of improving steam drain dischargeability, it is preferred to provide the gap 224 so as to have a dimension, in the radial directions of the module, of 1.0 mm or larger, and the dimension thereof is more preferably 2 mm or larger. In case where the gap 224 is large, the flow amount to run through the gap 224 during cross flow filtration may increase so that the flow amount to run through the center part and thereround in the radial direction of the hollow-fiber membrane module would decrease, and if so, the membrane cleaning efficiency by cross flow may lower. Accordingly, the gap is preferably 10 mm or less, more preferably 5 mm or less. In case where the space between the second potting part 26 and the lower cap 5 is liquid-tightly sealed, for example, by disposing a seal such as an O-ring between the second potting part 26 and the lower cap 5, steam drain may stagnate on the seal to prevent the module from being heated to a sufficiently high temperature, resulting in a sterilization failure. This configuration is hence undesirable.

<Method of Cross Flow Filtration with Cartridge Type Hollow-fiber Membrane Module>

Raw liquid flows into the cartridge type hollow-fiber membrane module 101D through the raw liquid inflow port 210 of the lower cap 5, and the raw liquid which has not permeated the hollow fiber membranes 1 is discharged from the cartridge type hollow-fiber membrane module 101D through the raw liquid outflow port 212. The filtrated liquid which has permeated the hollow fiber membranes 1 from the outside to the inside thereof passes through the hollow parts of the hollow fiber membranes 1 and is discharged from the cartridge type hollow-fiber membrane module 101D through the filtrated liquid outflow port 211 of the upper cap 4.

This mode of filtration in which raw liquid is filtrated while being caused to flow in parallel with the membrane surfaces is called "cross flow filtration", and has the effect of inhibiting the suspended substances, etc. contained in the raw liquid from accumulating on the membrane surfaces. Furthermore, in cases when the raw liquid outflow port 212 is closed, dead-end filtration can be performed in which the raw liquid is wholly filtrated. It is also possible to feed air through the raw liquid inflow port 210, thereby performing air scrubbing to clean the hollow fiber membranes. The air introduced is discharged through the raw liquid outflow port 212.

<Method of Steam Sterilization of Cartridge Type Hollow-fiber Membrane Module>

In the case where the cartridge type hollow-fiber membrane module is used in applications such as fermentation, steam sterilization is necessary. For discharging the steam drain to be generated during steam sterilization, in general, steam is applied from the upper direction toward the lower direction of piping. In the case where the region of the raw liquid side of the cartridge type hollow-fiber membrane module 101D is subjected to steam sterilization, steam may be fed from the raw liquid outflow port 212 and steam drain may be discharged out from the raw liquid inflow port 210. In the case where the region of the filtrated liquid side of the cartridge type hollow-fiber membrane module 101D is subjected to steam sterilization, steam may be fed from the filtrated liquid outflow port 211 and the steam drain may be discharged out from the raw liquid inflow port 210. At this time, the through holes 213 formed in the second end part also play a role of steam drain discharge port.

<Holding of Lifted Second Potting Part by Areal Contact>

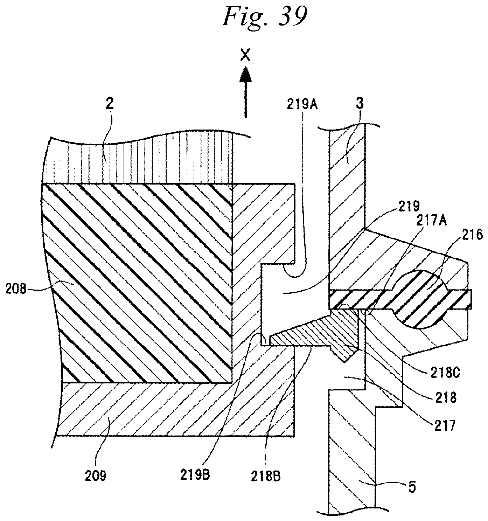

Fig. 39 is an enlarged view of the second end part case 209 and its vicinity of the cartridge type hollow-fiber membrane module 101D. Fig. 39 shows the structure of the module in which the second potting part 26 has been lifted up (has moved upward) during cross flow filtration or air scrubbing.

When raw liquid or air flows in through the raw liquid inflow port 210 of the housing during cross flow filtration or air scrubbing, the second potting part 26 is lifted upward (in the direction X) as shown in Fig. 39. At this point of time, the pin inner-side lower surface 218B of each pin 218 and the bottom surface (bottom) 219B of the corresponding second holding groove 219 of the second end part case 209 come into areal contact with each other, and the pin outer-side upper surface 218C of the pin 218 and the ceiling surface (ceiling) 217A of the corresponding first holding groove 217 of the housing come into areal contact with each other. As a result, the upward movement of the second potting part 26 is restricted.

As compared with line contacts, such areal contacts are low in the burden imposed on the members. It is therefore preferable that when the second potting part 26 has been lifted up during cross flow filtration or air scrubbing, the second potting part 26 is held by keeping the pin inner-side lower surfaces 218B in areal contact with the bottom surfaces 219B of the second holding grooves 219 and keeping the pin outer-side upper surfaces 218C in areal contact with the ceiling surfaces 217A of the first holding grooves 217. The term "areal contact" herein means contact between two objects in which the contact portions are flat surfaces. Meanwhile, the term "line contact" means contact between two objects in which the contact portions coincide with one line.

Due to this configuration, the pins 218 which are into contact with the ceiling surfaces 217A of the first holding grooves 217 are, on the other hand, locked with the bottom surfaces 219B of the second holding grooves 219. As a result, the movement of the second potting part 26 stops, and the membranes can be inhibited from being lifted up.

improvement of Steam Sterilizability by Line Contact>

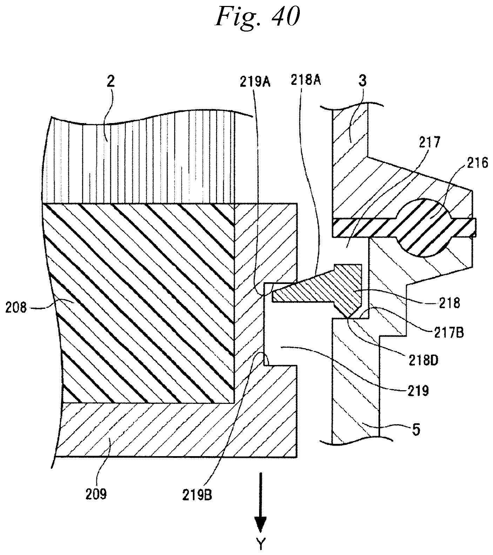

Fig. 40 is an enlarged view of the second end part case 209 and its vicinity of the cartridge type hollow-fiber membrane module 101D. Fig. 40 shows the structure of the module in which during steam sterilization, the second potting part 26 has descended (has moved downward) and the second potting part 26 is supported by the pins 218. There are cases where the hollow fiber membranes are stretched and ruptured upon the descent of the second potting part 26. It is therefore desirable to support the second potting part 26 to prevent the descent thereof.

During steam sterilization, when steam is fed through the raw liquid outflow port 212 of the housing, the second potting part 26 moves downward (in the direction Y) as shown in Fig. 40. At this point of time, the pin inner-side upper surface 218A of each pin 218 comes into line contact with the ceiling surface (ceiling) 219A of the second holding groove 219 of the second end part case 209, and the pin outer-side lower surface 218D of the pin 218 comes into line contact with the bottom surface (bottom) 217B of the first holding groove 217 of the housing. As a result, the downward movement of the second potting part 26 is restricted.

When the cartridge type hollow-fiber membrane module 101D is sterilized with steam, it is preferred to diminish contact surfaces and to provide gaps for steam penetration in order to improve sterilizability. In cases where the module has the structure in which the pin inner-side upper surfaces 218A can come into line contact with the ceiling surfaces 219A of the second holding grooves 219 and the pin outer-side lower surfaces 218D can come into line contact with the bottoms 217B of the first holding grooves 217, as shown in Fig. 40, it is possible to diminish contact surfaces and ensure gaps for steam penetration.

Due to this configuration, the pins 218 which have come into contact with the ceiling surfaces 219A of the second holding grooves 219 are, on the other hand, locked with the bottom surfaces 217B of the first holding grooves 217. As a result, the movement of the second potting part 26 stops and the membranes can be inhibited from descending.

Besides the structure shown in Fig. 40, the ceiling surfaces 219A of the second holding grooves 219 can be made to have an inclination to thereby cause the ceiling surfaces to come into line contact with the pin inner-side upper surfaces 218A. Alternatively, it is possible to make the bottom surfaces 217B of the first holding grooves 217 have an inclination to thereby cause the bottom surfaces to come into line contact with the pin outer-side lower surfaces 218D.

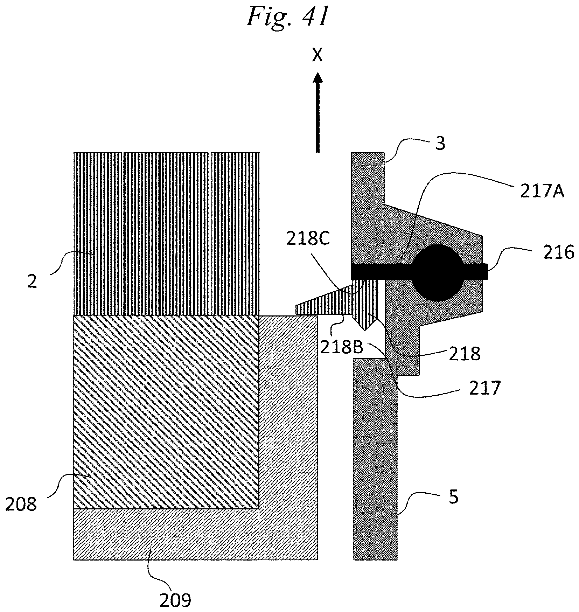

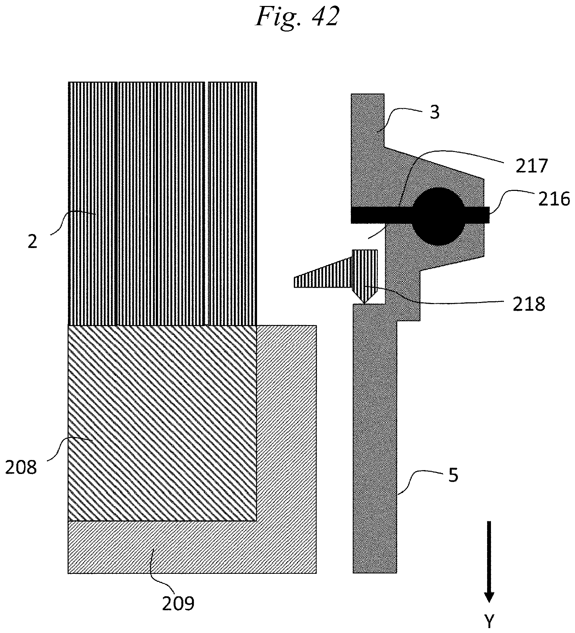

Fig. 41 and Fig. 42 each are an enlarged view of another embodiment of the second end part case 209 and therearound of the cartridge type hollow-fiber membrane module 101. Fig. 41 shows the structure of the module in which the second potting part 26 has been lifted up (has moved upward) during cross flow filtration or air scrubbing. When raw liquid or air flows in through the raw-fluid inflow port 210 of the housing during cross flow filtration or air scrubbing, the second potting part 26 is lifted upward (in the direction X) as shown in Fig. 41. At this point of time, the pin inner-side lower surface 218B of each pin 218 and some faces of the second end part case 209 come into areal contact with each other, and the pin outer-side upper faces 218C of the pins 218 and the ceiling faces (ceilings) 217A of the first holding grooves 217 of the housing come into aerial contact with each other. As a result, the upward movement of the second potting part 26 is restricted.

Fig. 42 is an enlarged view of still another embodiment of the second end part case 209 and therearound of the cartridge type hollow-fiber membrane module 101. In Fig. 42, when the second potting part 26 descends (moves downward) during steam sterilization, the first potting part 25 supports the hollow-fiber membranes and the second potting part. In the case where the hollow-fiber membranes have strength enough to support the hollow-fiber membranes themselves and the second potting part, the configuration of this embodiment may be employed.

<Length of Holding Grooves, and Gaps>

In the present invention, it is preferable that the length of each of the first holding grooves 217 and second holding grooves 219 in the radial direction of the module is 1 mm to 20 mm. In case where the length thereof is less than 1 mm, it is difficult to hold the second potting part. Meanwhile, the length thereof larger than 20 mm is undesirable because steam drain stagnation is apt to occur during steam sterilization of the module.

In the case where the cartridge type hollow-fiber membrane module of the present invention is to be subjected to steam sterilization, it is preferable that the holding part portion has a structure which facilitates steam penetration while steam drain stagnation is less apt to occur. For example, it is preferable that in the case where the cartridge type hollow-fiber membrane module 101D is to be subjected to steam sterilization, gaps are provided between the pins 218 and the second end part case 209, between the pins 218 and the lower cap 205, and between the pins 218 and the gasket 216. The provision of gaps along the radial direction and axial direction of the module facilitates steam penetration and makes it possible to improve sterilizability.

<Curvature of Hollow Fiber Membranes>

In cases where the inside of the module is not filled with a liquid and the hollow fiber membranes have low strength, the hollow fiber membranes 1 may rupture due to the weight of the second bonded part 208 and second end part case 209. It is therefore preferable that the second potting part 26 is supported by the holding part when the module is not operated for filtration.

For supporting the second potting part 26, it is necessary that the pin inner-side upper surfaces 218A of the pins 218 are in contact with the ceiling surfaces 219A of the second holding grooves 219 and that the pin outer-side lower surfaces 218D of the pins 218 are in contact with the bottom surfaces 217B of the first holding grooves 217. Use may be made of a method in which hollow fiber membranes having a relatively large length are used to produce the hollow-fiber membrane cartridge 100 beforehand, and the hollow fiber membranes are pushed in when the lower cap 5 is connected. The lower cap 5 is then fixed, with the hollow fiber membranes 1 being in a curved state. As a result, the second potting part 26 is pushed downward in the module by the elasticity of the hollow fiber membranes 1, and the pin inner-side upper surfaces 218A come into contact with the ceiling surfaces 219A of the second holding grooves 219 and the pin outer-side lower surfaces 218D come into contact with the bottom surfaces 217B of the first holding grooves 217. Thus, the second potting part 26 can be supported. It is preferable here that the length over which the hollow fiber membranes 1 are pushed in is 0.3% to 5% of the original length of the hollow-fiber membranes. In case where the push-in length is less than 0.3%, this length is insufficient and there is a concern that the second potting part 26 could not be supported. In case where the push-in length is larger than 5%, there is a concern that the membranes might be bent and damaged.

(Other Embodiments)

In the first embodiment, the housing body 3 and the flow regulation cylinder 9 are sealed by a sealing structure where the first seal 15 is compressed in the radial direction of the housing body 3 (in the horizontal direction in Fig. 1) to generate sliding friction in detaching the hollow-fiber membrane cartridge 100, and the flow regulation cylinder 9 and the first bundling and fixing part 11 are sealed by a sealing structure where the second seal 16 is compressed at least in the virtual axial direction of the housing body 3 (in the vertical direction in Fig. 1) to reduce the sliding friction resistance to be generated in detaching the hollow-fiber membrane cartridge 100, on the assumption that the frequency of exchanging the hollow-fiber membrane cartridge 100 alone while the flow regulation cylinder 9 is kept fixed to the housing body is high.

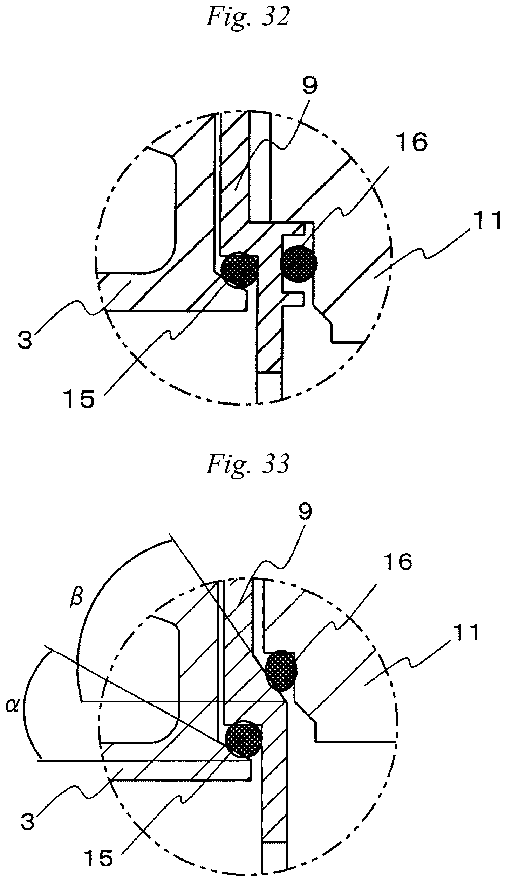

In the case where the hollow-fiber membrane module of the first embodiment is preferably such that, in exchanging the hollow-fiber membrane cartridge 100, the flow regulation cylinder 9 is also taken out along with the hollow-fiber membrane cartridge 100, it is desirable that, as in Fig. 32, the housing body 3 and the flow regulation cylinder 9 are sealed by an easily-detachable sealing structure where the first seal 15 is compressed at least in the virtual axial direction of the housing body 3, and that the flow regulation cylinder 9 and the first bundling and fixing part 11 are sealed by a sealing structure where the second seal 16 is compressed in the radial direction of the housing body 3 to generate sliding friction in detaching the hollow-fiber membrane cartridge 100.

In the case where both the hollow-fiber membrane cartridge 100 and the flow regulation cylinder 9 are attached and detached at the same frequency in the first embodiment, it is desirable that both the first seal 15 and the second seal 16 are compressed in the axial direction of the housing body 3 to form the sealing structure, as facilitating detachment of the hollow-fiber membrane cartridge 100 and the flow regulation cylinder 9. Also in this case, as in Fig. 33, a configuration of facilitating detachment of the hollow-fiber membrane cartridge 100 alone or a configuration of facilitating detachment of both the hollow-fiber membrane cartridge 100 and the flow regulation cylinder 9 can be formed by changing the inclination $\alpha$ of the face to receive the first seal 15 with respect to the horizontal direction and the inclination $\beta$ of the face to receive the second seal 16 with respect to the horizontal direction. For example, in the case where the first seal 15 and the second seal 16 are the same seal which is made of the same material, has the same hardness and has a cross section having the same wire diameter, and sealing with these is at the same squeeze rate, and when the angles of the faces that receive the seals are in a relation of $\alpha < \beta$ as in Fig. 33, the relation between the sliding friction force A given to the first seal 15 and the sliding friction force B given to the second seal 16 in detaching the hollow-fiber membrane cartridge 100 is A < B, and consequently, in this configuration, both the hollow-fiber membrane cartridge 100 and the flow regulation cylinder 9 can be removed more readily and preferentially than removal of the hollow-fiber membrane cartridge 100 alone.

As described above, by selecting the compression direction of the seal and the inclination angle of the face to receive the seal in accordance with the member to be detached and with the frequency of detachment, the detaching operability may be enhanced. By inclining the face that receives the seal, the filtrated liquid and also the drain during sterilization and cleaning can be readily discharged out and the inside of the cartridge type hollow-fiber module can be kept more sanitary.

In the above-mentioned embodiment, the position of the O-ring groove 31 is positioned above the outer periphery of the flow regulation cylinder 9, but may be positioned below the center thereof, and the height thereof is not limited. Since the housing body 3 and the flow regulation cylinder 9 are sealed with the first seal 15, the flow regulation holes 10 above the first seal 15 could not function and therefore, it is desirable that the O-ring grooves 31 exist in the upper part as enabling efficient utilization of the flow regulation cylinder 9.

In the above-mentioned embodiment, the O-ring grooves 31 are provide in the outer periphery of the flow regulation cylinder 9 and the first seal 15 is fixed to the flow regulation cylinder 9 in a mode of internal clamping to thereby assemble the cartridge type hollow-fiber membrane module 101, but the first seal 15 may be fitted to the housing body 3 on the inner peripheral side thereof in a mode of external clamping. Since the first seal 15 is fixed to the flow regulation cylinder 9 in a mode of internal clamping, this configuration is advantageous in that, as compared with the case where external clamping O-ring grooves 31 are provided to the housing body 3, the O-ring grooves 31 can be exposed out of the housing 30 for facilitating cleaning and washing by drawing the flow regulation cylinder 9 from the housing body 3.

In the above-mentioned embodiment, the second seal 16 is fixed to the first bundling and fixing part 11 to assemble the cartridge type hollow-fiber membrane module 101, but the second seal 16 may be first fixed to the flow regulation cylinder 9 and then the cartridge type hollow-fiber membrane module 101 may be inserted to realize sealing by the second seal 16. In exchanging operation for the hollow-fiber membrane cartridge 100, the second seal 16 can be surely taken out without leaving it inside the housing 30 by drawing the hollow-fiber membrane cartridge 100 from the housing 30, since the second seal 16 is fixed to the first bundling and fixing part 11 in a mode of internal clamping, and consequently, this configuration is advantageous in that the second seal 16 can be exposed out of the housing 30 to facilitate cleaning and washing the module.

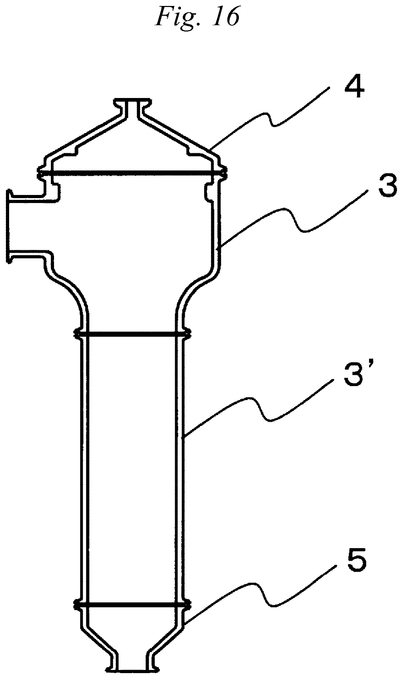

In the above-mentioned embodiment, the housing 30 is constituted by three members of the housing body 3, the upper cap 4 and the lower cap 5, but for example, the housing may include some divided members, for example, by forming the housing body 3 by the use of plural members. When the small-diameter part in the housing body 3 in the above-mentioned embodiment is divided as in Fig. 16, the forming workability for the raw liquid outflow port 8 to be provided on the side surface of the housing body 3 may be enhanced, and the configuration has other advantages in that any large-sized member is unnecessary and the module can be constructed by the use of general-purpose pipe materials.

In the above-mentioned embodiment, the gasket 18 is mounted along the inner periphery of the grooves relative to the gasket groove 17 on the upper-end face of the first bundling and fixing part 11, but any other mounting configuration is also employable here where the gasket is mounted along the outer periphery of the grooves. For example, for O-ring, when an internal pressure is given to the liquid reservoir 34 as in the above-mentioned embodiment, a configuration of mounting it along the outer periphery of the grooves is employed. By compressing the gasket 18 with the upper cap 4 pressed thereto from the above, the liquid reservoir 34 is kept liquid-tight, but after steam sterilization of the liquid reservoir 34, steam drain formed of chilled steam may remain in the gasket groove 17 positioned lower than the liquid reservoir 34. In the case where the gasket 18 is mounted along the inner periphery of the gasket groove 17, the groove width where steam drain may stay could be reduced. The width of the gasket groove 17 is about 1.1 times the width of the gasket 18. Even in the case where the gasket 18 is pressed to the outer peripheral side of the gasket groove 17 by the internal pressure of the liquid reservoir 34, the staying steam drain amount could be kept small since the groove width fluctuation is limited.

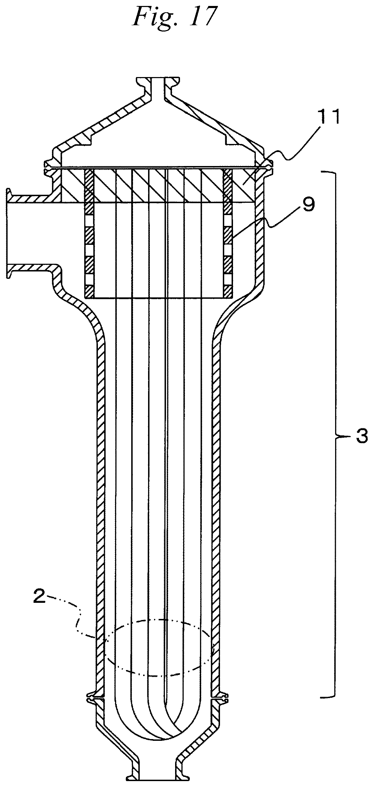

In the above-mentioned embodiment, the housing body 3 and the flow regulation cylinder 9, as well as the flow regulation cylinder 9 and the first bundling and fixing part 11 are sealed by the use of the O-ring, and the first bundling and fixing part 11 and the upper cap 4 are sealed by the use of a flat gasket, and any sealable mechanism is employable for the sealing. For example, a ring-shaped V-packing or a mountain-shaped gasket, or a half-round gasket or the like is employable. In addition, elastic molded articles may also be used for clamping the constituent members. Further, the housing body 3, the flow regulation cylinder 9 and the first bundling and fixing part 11 may be bonded as shown in Fig. 17 (not falling under the scope of the present invention), that is, the configuration is not limited to a cartridge-type one. The first bundling and fixing part 11 and the flow regulation cylinder 9 may be sealed with a second seal such as an O-ring and a gasket, and the flow regulation cylinder 9 and the housing body 3 may be directly bonded and fixed or integrally formed to have a liquid-tightly fixing structure without using any additional seal. In this case, only the hollow-fiber membrane bundles 2 and the first bundling and fixing part 11 can be readily taken out, and therefore the configuration is favorable for the case requiring frequent exchange of the hollow-fiber membranes. The embodiment as mentioned above where the flow regulation cylinder 9 and the housing body 3 are liquid-tightly sealed with the first seal, and the flow regulation cylinder 9 and the first bundling and fixing part 11 are liquid-tightly sealed with the second seal, has other advantages in that the operation of exchanging the hollow-fiber membrane bundles 2 and the first bundling and fixing part 11 is easy, and in addition, the space between the flow regulation cylinder 9 and the housing body 3 can be readily cleaned up, that is, the module of the embodiment can be used in a sanitary manner.

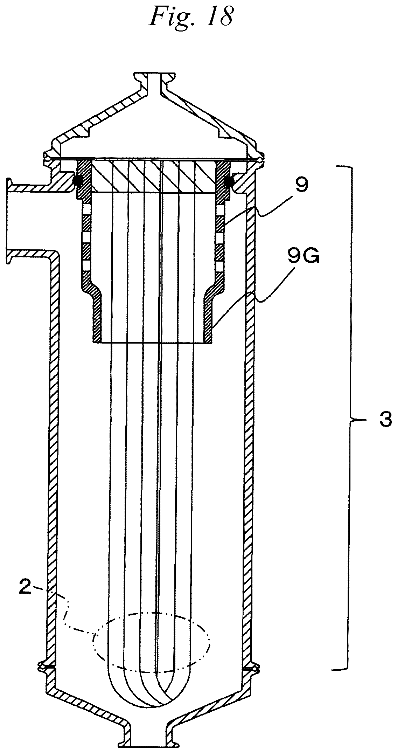

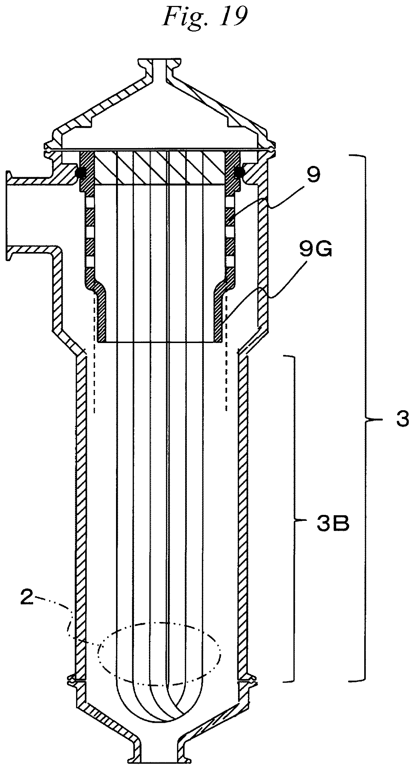

In the first embodiment, a small-diameter part whose inner diameter is smaller than the inner diameter D1 of the flow regulation cylinder 9 in the region where the flow regulation holes 10 exist is provided in the housing body 3. In this regard, as long as the small-diameter part is provided below the region where the flow regulation holes 10 exist, the flow regulation holes 10 can be prevented from being clogged by the hollow-fiber membranes 1. Like in this embodiment, the small-diameter part is provided in the housing body 3, and the flow regulation cylinder 9 is short so as to have a length that may be housed in the large-diameter part 3A; or as shown in Fig. 18 (not falling under the scope of the present invention), the small-diameter part 9G may be provided in the flow regulation cylinder 9 below the region where the flow regulation holes 10 exist. In this case, the diameter of the housing body 3 may be made small to provide the small-diameter part 3B so as to reduce the channel area of the housing body 3, like in Fig. 19. Especially in cross flow filtration, when the channel area is large, such is problematic in that the cross flow rate increases, and therefore, the diameter of the housing body 3 may be made the same as or further smaller than the small-diameter part 9G of the flow regulation cylinder 9 at the position further below the flow regulation cylinder 9 in Fig. 19, thereby providing the small-diameter part 3B.

Here in the small-diameter part 9G, holes or slits (not shown) may be formed for facilitating visual observation of the hollow-fiber membranes 1, but in consideration of the risk of damage to the hollow-fiber membranes 1.

In the above-mentioned embodiment, the hollow-fiber membrane bundles 2 are sealed at the second bundling and fixing part. However, so far as the opened state of the hollow parts could be eliminated, for example, so far as the whole openings of the hollow-fiber membranes could be sealed by injecting therein a curable resin that has good flowability such as a silicone resin, an epoxy resin, and an urethane resin, it is unnecessary to fix the hollow-fiber membranes 1 as the second bundling and fixing part. For the same reason, the hollow-fiber membrane bundles 2 may be folded in a U-shaped manner so that the whole openings may be formed in the first bundling and fixing part, as shown in Fig. 17, Fig. 18 and Fig. 19 (not falling under the scope of the present invention). Accordingly, the configuration where the hollow-fiber membrane bundles are bundled and fixed in such a state where at least one end part of the hollow-fiber membrane bundles, that is, at least the first end part thereof is kept open includes the following condition (i) and (ii). (i) Like in the first embodiment (falling under the scope of the present invention), the hollow-fiber membrane bundles 2 are straight, and are bundled and fixed in such a state that one end part of the hollow-fiber membrane bundles 2 is kept open while the other end part thereof is kept closed. (ii) (not falling under the scope of the present invention) Like in Fig. 17 to Fig. 19 (not falling under the scope of the present invention), the hollow-fiber membrane bundles 2 are used as folded in a U-shaped manner, and one side thereof is bundled and fixed while both ends of the hollow-fiber membrane bundles 2 are kept open, and the other side thereof corresponds to the U-folded part of the hollow-fiber membranes.

In the first embodiment, the inner diameter Di of the small-diameter part 3B is so designed as to be close to the outer diameter of the second bundling and fixing part case 13. However, so far as the small-diameter part 3B is able to be divided and sealed in the axial direction, the inner diameter thereof may be smaller than the outer diameter of the second bundling and fixing part case 13.

As in Fig. 21, regarding the distance L1 between the outermost diameter of the hollow-fiber membrane existing region and the inner surface of the flow regulation cylinder, the distance L2 between the inner surface of the housing and the outer surface of the flow regulation cylinder at the position where the nozzle is arranged on the side surface of the housing, and the inner diameter L3 of the nozzle arranged on the side surface of the housing, each diameter may be defined freely, but in consideration of the flowability and the pressure drop inside the module, it is desirable that these satisfy the following relations.

L1 ≥ 3 mm, more preferably L1 ≥ 10 mm
L2 ≥ 3 mm, more preferably L2 ≥ 7 mm, even more preferably L2 ≥ 10 mm
L3 ≥ 8 mm, more preferably L3 ≥ 10 mm, even more preferably L3 ≥ 20 mm
10 > L2/L1 ≥ 0.5, more preferably 4 > L2/L1 ≥ 1
100 ≥ L3/L2 ≥ 2, more preferably 20 ≥ L3/L2 ≥ 4

Here, regarding the length L1 between the outermost diameter of the hollow-fiber membrane existing region and the inner surface of the flow regulation cylinder, L1 must have a suitable length in order to prevent the hollow-fiber membranes from being in contact with the holes of the flow regulation cylinder owing to cross flow or the like thereby being damaged or ruptured, and on the other hand, for the reason that, when L1 is too long, the diameter of the housing may increase or the hollow-fiber membrane bundle diameter may decrease so that there may occur a problem in that the number of the hollow-fiber membranes may reduce.

Regarding the distance L2 between the inner surface of the housing and the outer surface of the flow regulation cylinder at the position where the nozzle is arranged on the side surface of the housing, when the pressure drop owing to the flow such as cross flow in the module increases, the liquid sending power increases, and in addition, in liquid passing around the outer peripheral part of the flow regulation cylinder, the liquid could more easily run through the area nearer from the nozzle on the side surface and the liquid could hardly run through the area far from the nozzle on the side surface, thereby causing a factor of generating a drift flow. Consequently, L2 must have a suitable length.

Regarding the inner diameter L3 of the nozzle arranged on the side surface of the housing, L3 must have a suitable length in order that the flow such as cross flow in the module could be discharged out of the module without drift flow and that the liquid sending pressure drop is reduced so that the liquid sending power could not increase too much. In addition, it preferably has a standard size in view of the relation to the pipelines to be connected therewith.

Regarding L2/L1, standard articles are desired to be used as much as possible from the viewpoint of cost in actually producing modules, and for this, the outer diameter of the housing is selected to be a predetermined length, and the flow regulation cylinder must be positioned in a limited space. L1 and L2 may be individually determined within the above-mentioned range. The value of L2/L1 must be a suitable one in order to reduce the liquid sending pressure drop without damage to hollow-fiber membranes, and especially for the reason that when the value of L2/L1 is small, the flow around the nozzle on the side surface may increase owing to discharge of cross flow through the nozzle on the side surface, thereby causing a risk of drift flow formation inside the module.

Regarding L3/L2, when the diameter of the nozzle on the side surface is increased, the channel area in the outer peripheral part of the flow regulation cylinder may also be increased, but owing to discharge of the cross flow through the nozzle on the side surface, the flow around the nozzle on the side surface increases, thereby causing a risk of generation of drift flow inside the module. Consequently, the value of L3/L2 must also be a suitable one.

In the above-mentioned embodiment exemplifies a case where raw liquid before filtration flows out through the raw liquid outflow port 8 of the housing body 3, but the present invention is also effective in a case where raw liquid flows out through the nozzle arranged on the side surface of the housing body 3, and the flow target may be a liquid before filtration or a liquid after filtration, and further it may also be any liquid, vapor or a liquid/vapor mixture, as not specifically limited. Accordingly, not limited to cross flow, the present invention is applicable also to dead-end filtration, and not limited to an external-pressure type hollow-fiber membrane module where filtration is carried out with pressure application from outside the hollow-fiber membranes, the present invention is applicable also to an internal-pressure type hollow-fiber membrane module where filtration is carried out with pressure application from inside the hollow-fiber membranes.

The present invention should not be construed as being limited to the embodiments described above, and modifications, improvements, etc. can be suitably made therein at will. Furthermore, the material, shape, dimensions, numerical values, configuration, number, position, etc. of each constituent element in the embodiments described above are not limited so long as the present invention can be achieved therewith.

INDUSTRIAL APPLICABILITY

The cartridge type hollow-fiber membrane module of the present invention can be used in the fields of fermentation industry, production of medicines, food industry, water treatment, etc.

DESCRIPTION OF REFERENCE NUMERALS AND SIGNS

| | |
|---|---|
| 100 | Hollow-fiber membrane cartridge |
| 101 | Cartridge-type hollow-fiber membrane module (hollow-fiber membrane module) |
| 110 | Filtration part |
| 1 | Hollow-fiber membrane |
| 2 | Hollow-fiber membrane bundle |
| 3 | Housing body |
| 3A | Large-diameter part |
| 3B | Small-diameter part |
| 3C | Flange |
| 3D | Flange |
| 4 | Upper cap |
| 4A | Stepped part |
| 4C | Flange |
| 5 | Lower cap |
| 5D | Flange |
| 6 | Raw liquid inflow port |
| 7 | Filtrated liquid outflow port |
| 8 | Raw liquid inflow port (nozzle) |
| 9 | Flow regulation cylinder (cylindrical case) |
| 9C | Flange |
| 9E | Convex portion |
| 10 | Flow regulation hole |
| 11 | First bundling and fixing part |
| 11E | Stepped part |
| 12 | Second bundling and fixing part |
| 13 | Second bundling and fixing part case |
| 14 | Through-hole |
| 15 | First seal |
| 16 | Second seal |
| 17 | Gasket groove |
| 18 | Gasket |
| 19 | Seal |
| 30 | Housing |
| 31 | O-ring groove |
| 32 | Hollow-fiber membrane existing region |
| 33 | Hollow part |
| 34 | Liquid reservoir |
| 35 | Circular channel |

**Claims**

1. A hollow-fiber membrane module (101) comprising:

   a hollow-fiber membrane bundle (2) including a plurality of hollow-fiber membranes;
   a first bundling and fixing part (11) at which the hollow-fiber membrane bundle (2) is bundled and fixed in a condition that at least a first end part of the hollow-fiber membrane bundle (2) is kept open;

a housing (30) having at least one nozzle (8) on a side surface thereof nearer to the first end part and housing the hollow-fiber membrane bundle (2) therein; and

a flow regulation cylinder (9) having a plurality of flow regulation holes (10) and existing between the first bundling and fixing part (11) and the housing (30) to liquid-tightly fix between the first bundling and fixing part (11) and the housing (30),

**characterized in that**:

the housing (30) is so configured as to have a small-diameter part (3B) which has an inner diameter smaller than an inner diameter of the flow regulation cylinder facing a part of the housing (30) on which the nozzle (8) is provided, and which is arranged on a lower side than a lower end of the flow regulation cylinder (9) in an axial direction of the hollow-fiber membrane module (101),

a second bundling and fixing part (12) which bundles the hollow-fiber membrane bundles (2) in a condition that the second end part thereof is sealed by a first seal (15) which liquid-tightly seals between the housing (30) and the flow regulation cylinder (9), and a second seal (16) which liquid-tightly seals between the flow regulation cylinder (9) and the first bundling and fixing part (11), the length of the hollow-fiber membranes running from the lower end of the upper fixing part (11) to the upper end of the lower fixing part (12) which bundles the hollow-fiber membrane bundles (2) in a condition that the second end part thereof is sealed, is longer than the positional linear distance (L) from the lower end of the upper fixing part (11) to the upper end of the lower fixing part (12), wherein the housing (30) includes a stepped, cylindrical housing body (3) having a plurality of diameters, an upper cap (4) disposed on the upper end side of the housing body (3) to cover the opening, and a lower cap (5) disposed on the lower end side of the housing body (3) to cover the opening from downside, wherein the upper cap (4) and the housing body (3), as well as the housing body (3) and the lower cap (5) are respectively liquid-tightly connected to each other by a gasket and a clamp, wherein the housing body (3) has a plurality of diameters, including a large-diameter part (3A) of the upper part and a small-diameter part (3B) of the lower part, wherein the large-diameter part (3A) and the small-diameter part (3B) are configured to have a common axis in the longitudinal direction of the housing (30), and the inner peripheral face of the large-diameter part (3A) and the inner peripheral face of the small-diameter part (3B) are taper-like connected to each other, wherein at the upper end of the housing body (3), a flange (3C) is provided, and at the lower end thereof, a flange (3D) is provided, both covering the whole circumference of the housing body (3),

wherein the diameter of the lower cap (5) reduces towards the lower end side, thereby forming a raw liquid inflow port (6),

wherein the inner diameter (Di) of the small-diameter part (3B) is made smaller than the inner diameter (D1) of the flow regulation cylinder (9) in the part where flow regulation holes exist, and is made to be nearly the same as the outermost diameter (Df) of the hollow-fiber membrane existing region at the lower end of the first bundling and fixing part,

wherein the inner diameter (Di) of the small-diameter part (3B), the inner diameter (D1) of the flow regulation cylinder (9) in the part where flow regulation holes exist, and the inner diameter (Do) of the large-diameter part (3A) satisfy a relation of Di < D1 < Do, and

wherein the direct distance L from the lower end of the first bundling and fixing part (11) to the upper end of the second bundling and fixing part (12), and the average length (Lm) of the hollow-fiber membranes (1) from the lower end of the first bundling and fixing part (11) to the upper end of the second bundling and fixing part (12) satisfies D1 -Df > (Lm -L)/2.

2. The hollow-fiber membrane module (101) according to claim 1, wherein the first bundling and fixing part (11) and the flow regulation cylinder (9), and the housing (30) and the flow regulation cylinder (9) are liquid-tightly fixed by bonding, respectively.

3. The hollow-fiber membrane module (101) according to claim 1 or 2, wherein an outermost diameter of a lower end of the first bundling and fixing part (11) in the axial direction of the hollow-fiber membrane module (101), and an outermost diameter of a hollow-fiber membrane existing region where at least the first end part of the hollow-fiber membrane bundle (2) exists at the lower end of the first bundling and fixing part (11) in the axial direction of the hollow-fiber membrane module (101), satisfy the following formula:

$$Df < Du$$

in which:

Df is the outermost diameter of the hollow-fiber membrane existing region at the end of the first bundling and fixing part (11), and
Du is the outermost diameter of the lower end of the first bundling and fixing part (11).

4. The hollow-fiber membrane module (101) according to any one of claims 1 to 3, further comprising:

a fixing part which fixes the first bundling and fixing part detachably relative to the housing;
a sealing part which liquid-tightly seals between the first bundling and fixing part (11) and the housing (30); and
a holding part (218) which holds the second bundling and fixing part (12) so that the second bundling and fixing part (12) is detachable relative to the housing (30) and so that liquid is capable of passing through between the second bundling and fixing part (12) and the housing (30).

5. The hollow-fiber membrane module according to any one of claims 1 to 4, further comprising:

a second bundling and fixing part (12) which bundles the hollow-fiber membrane bundle (2) in a condition that a second end part thereof is sealed;
a first fixing part which fixes the flow regulation cylinder (9) detachably relative to the housing (30);
a first sealing part which liquid-tightly seals between the flow regulation cylinder (9) and the housing (30);
a second fixing part which fixes the first bundling and fixing part (11) detachably relative to the flow regulation cylinder (9);
a second sealing part which liquid-tightly seals between the first bundling and fixing part (11) and the flow regulation cylinder (9); and
a holding part (218) which holds the second bundling and fixing part (12) so that the second bundling and fixing part (12) is detachable relative to the housing (30) and so that liquid is capable of passing through between the second bundling and fixing part (12) and the housing (30).

6. The hollow-fiber membrane module (101) according to any one of claims 1 to 5, wherein a distance L1 between the outermost diameter of the hollow-fiber membrane existing region where the first end part exists, and an inner surface of the flow regulation cylinder (9) satisfy the following formula:

$$L1 \geq 3 \text{ mm}.$$

7. The hollow-fiber membrane module (101) according to any one of claims 1 to 6, wherein the distance L1 between the outermost diameter of the hollow-fiber membrane existing region where the first end part exists, and the inner surface of the flow regulation cylinder (9), and a distance L2 between an inner surface of the housing and an outer surface of the flow regulation cylinder (9) at a position where the nozzle (8) of the housing (30) is arranged, satisfy the following formula:

$$10 \geq L2/L1 \geq 0.5.$$

**Patentansprüche**

1. Hohlfaser-Membranmodul (101) umfassend:

ein Hohlfasermembranbündel (2), das eine Mehrzahl von Hohlfasermembranen aufweist;
einen ersten Bündelungs- und Fixierungsabschnitt (11), an dem das Hohlfasermembranbündel (2) gebündelt und in einem Zustand fixiert ist, in dem mindestens ein erster Endabschnitt des Hohlfasermembranbündels (2) offen gehalten ist;
ein Gehäuse (30), das mindestens eine Düse (8) an einer Seitenoberfläche davon näher an dem ersten Endabschnitt aufweist und in dem das Hohlfasermembranbündel (2) aufgenommen ist; und
einen Strömungsregulierungszylinder (9), der eine Mehrzahl von Strömungsregulierungslöchern (10) aufweist und zwischen dem ersten Bündelungs- und Fixierungsabschnitt (11) und dem Gehäuse (30) angeordnet ist, um zwischen dem ersten Bündelungs- und Fixierungsabschnitt (11) und dem Gehäuse (30) flüssigkeitsdicht zu fixieren,
**dadurch gekennzeichnet, dass**:

das Gehäuse (30) mit einem Kleindurchmesserabschnitt (3B) konfiguriert ist, der einen Innendurchmesser aufweist, der kleiner ist als ein Innendurchmesser des Strömungsregelungszylinders, der einem Abschnitt des Gehäuses (30) zugewandt ist, an dem die Düse (8) vorgesehen ist, und der an einer unteren Seite als ein unteres Ende des Strömungsregelungszylinders (9) in einer axialen Richtung des Hohlfaser-Membranmoduls (101) angeordnet ist,
ein zweites Bündelungs- und Fixierungsabschnitt (12), der die Hohlfasermembranbündel (2) in einem Zustand bündelt, dass der zweite Endabschnitt davon durch eine erste Dichtung (15), die flüssigkeitsdicht zwischen dem Gehäuse (30) und dem Strömungsregelungszylinder (9) abdichtet, und eine zweite Dichtung (16), die flüssigkeitsdicht zwischen dem Strömungsregelungszylinder (9) und dem ersten Bündelungs- und Fixierungsabschnitt (11) abdichtet, abgedichtet ist,

die Länge der Hohlfasermembranen, die von dem unteren Ende des oberen Fixierungsabschnitts (11) zu dem oberen Ende des unteren Fixierungsabschnitts (12) verläuft, der die Hohlfasermembranbündel (2) in einem Zustand bündelt, in dem der zweite Endabschnitt davon abgedichtet ist, länger ist als der positionsbezogene lineare Abstand (L) von dem unteren Ende des oberen Fixierungsabschnitts (11) zu dem oberen Ende des unteren Fixierungsabschnitts (12), wobei das Gehäuse (30) einen abgestuften, zylindrischen Gehäusekörper (3) mit einer Mehrzahl von Durchmessern, eine obere Kappe (4), die an der oberen Endseite des Gehäusekörpers (3) angeordnet ist, um die Öffnung abzudecken, und eine untere Kappe (5) aufweist, die an der unteren Endseite des Gehäusekörpers (3) angeordnet ist, um die Öffnung von einer Unterseite her abzudecken, wobei die obere Kappe (4) und der Gehäusekörper (3) sowie der Gehäusekörper (3) und die untere Kappe (5) jeweils flüssigkeitsdicht miteinander durch eine Dichtung und eine Klammer verbunden sind,

wobei der Gehäusekörper (3) eine Mehrzahl von Durchmessern aufweist, umfassend einen Großdurchmesserabschnitt (3A) des oberen Abschnitts und einen Kleindurchmesserabschnitt (3B) des unteren Abschnitts, wobei der Großdurchmesserabschnitt (3A) und der Kleindurchmesserabschnitt (3B) konfiguriert sind, um eine gemeinsame Achse in der longitudinalen Richtung des Gehäuses (30) aufzuweisen, und die innere Umfangsoberfläche des Großdurchmesserabschnitts (3A) und die innere Umfangsoberfläche des Kleindurchmesserabschnitts (3B) kegelförmig miteinander verbunden sind, wobei an dem oberen Ende des Gehäusekörpers (3) ein Flansch (3C) vorgesehen ist und an dem unteren Ende davon ein Flansch (3D) vorgesehen ist, die beide den gesamten Umfang des Gehäusekörpers (3) abdecken, wobei sich der Durchmesser der unteren Kappe (5) zur unteren Endseite reduziert, sodass ein roher Flüssigkeitszuflussanschluss (6) geformt ist,

wobei der Innendurchmesser (Di) des Kleindurchmesserabschnitts (3B) kleiner als der Innendurchmesser (D1) des Strömungsregulierungszylinders (9) an dem Abschnitt eingerichtet ist, an dem Strömungsregulierungslöcher angeordnet sind, und eingerichtet ist, um nahezu derselbe wie der äußerste Durchmesser (Df) des Hohlfaser-Membrane bestehenden Bereichs an dem unteren Ende des ersten Bündelungs- und Fixierungsabschnitts zu sein,

wobei der Innendurchmesser (Di) des Kleindurchmesserabschnitts (3B), der Innendurchmesser (D1) des Strömungsregulierungszylinders (9) an dem Abschnitt, an dem Strömungsregulierungslöcher angeordnet sind, und der Innendurchmesser (Do) des Großdurchmesserabschnitts (3A) eine Gleichung Di < D1 < Do erfüllen, und wobei der direkte Abstand L von dem unteren Ende des ersten Bündelungs- und Fixierungsabschnitts (11) zu dem oberen Ende des zweiten Bündelungs- und Fixierungsabschnitts (12) und die durchschnittliche Länge (Lm) der Hohlfasermembranen (1) von dem unteren Ende des ersten Bündelungs- und Fixierungsabschnitts (11) zu dem oberen Ende des zweiten Bündelungsund Fixierungsabschnitts (12) die Gleichung D1 -Df > (Lm -L)/2 erfüllen.

2. Hohlfaser-Membranmodul (101) nach Anspruch 1, wobei der erste Bündelungs- und Fixierungsabschnitt (11) und der Strömungsregulierungszylinder (9) sowie das Gehäuse (30) und der Strömungsregulierungszylinder (9) jeweils durch Kleben flüssigkeitsdicht fixiert sind.

3. Hohlfaser-Membranmodul (101) nach Anspruch 1 oder 2, wobei ein äußerster Durchmesser eines unteren Endes des ersten Bündelungs- und Fixierungsabschnitts (11) in der axialen Richtung des Hohlfaser-Membranmoduls (101) und ein äußerster Durchmesser eines Hohlfaser-Membrane bestehenden Bereichs, an dem mindestens der erste Endabschnitt des Hohlfaser-Membranbündels (2) an dem unteren Ende des ersten Bündelungs- und Fixierungsabschnitts (11) in der axialen Richtung des Hohlfaser-Membranmoduls (101) angeordnet ist, die folgende Formel erfüllen:

$$Df < Du$$

in welcher:

Df der äußerste Durchmesser des Hohlfaser-Membrane bestehenden Bereichs ist, der an dem Ende des ersten Bündelungs- und Fixierungsabschnitts (11) angeordnet ist, und

Du der äußerste Durchmesser des unteren Endes des ersten Bündelungs- und Fixierungsabschnitts (11) ist.

4. Hohlfaser-Membranmodul (101) nach einem der Ansprüche 1 bis 3, ferner umfassend:

einen Fixierungsabschnitt, der den ersten Bündelungs- und Fixierungsabschnitt relativ zum Gehäuse lösbar fixiert;
ein Dichtungsabschnitt, der flüssigkeitsdicht zwischen dem ersten Bündelungs- und Fixierungsabschnitt (11) und dem Gehäuse (30) abdichtet; und
ein Halteabschnitt (218), der den zweiten Bündelungs- und Fixierungsabschnitt (12) hält, sodass der zweite Bündelungs- und Fixierungsabschnitt (12) relativ zu dem Gehäuse (30) lösbar ist und sodass Flüssigkeit zwischen dem zweiten Bündelungs- und Fixierungsabschnitt (12) und dem Gehäuse (30) passieren kann.

5. Hohlfaser-Membranmodul nach einem der Ansprüche 1 bis 4, ferner umfassend:

einen zweiten Bündelungs- und Fixierungsabschnitt (12), der das Hohlfasermembranbündel (2) in einem Zustand bündelt, in dem ein zweiter Endabschnitt davon abgedichtet ist;
einen ersten Fixierungsabschnitt, der den Strömungsregulierungszylinder (9) relativ zu dem Gehäuse (30) lösbar fixiert;
einen ersten Dichtungsabschnitt, der flüssigkeitsdicht zwischen dem Strömungsregulierungszylinder (9) und dem Gehäuse (30) abdichtet;
einen zweiten Fixierungsabschnitt, der den ersten Bündelungs- und Fixierungsabschnitt (11) relativ zu dem Strömungsregulierungszylinder (9) lösbar fixiert;
einen zweiten Dichtungsabschnitt, der flüssigkeitsdicht zwischen dem ersten Bündelungs- und Fixierungsabschnitt (11) und dem Strömungsregulierungszylinder (9) abdichtet; und
einen Halteabschnitt (218), der den zweiten Bündelungs- und Fixierungsabschnitt (12) hält, sodass der zweite Bündelungs- und Fixierungsabschnitt (12) relativ zu dem Gehäuse (30) lösbar ist und sodass Flüssigkeit zwischen dem zweiten Bündelungs- und Fixierungsabschnitt (12) und dem Gehäuse (30) passieren kann.

6. Hohlfaser-Membranmodul (101) nach einem der Ansprüche 1 bis 5, wobei ein Abstand L1 zwischen dem äußersten Durchmesser des Hohlfaser-Membrane bestehenden Bereichs, an dem der erste Endabschnitt angeordnet ist, und einer inneren Oberfläche des Strömungsregulierungszylinders (9) die folgende Formel erfüllt:

$$L1 \geq 3 \text{ mm.}$$

7. Hohlfaser-Membranmodul (101) nach einem der Ansprüche 1 bis 6, wobei der Abstand L1 zwischen dem äußersten Durchmesser des Hohlfaser-Membrane bestehenden Bereichs, an dem der erste Endabschnitt angeordnet ist, und der inneren Oberfläche des Strömungsregulierungszylinders (9) und ein Abstand L2 zwischen einer inneren Oberfläche des Gehäuses und einer äußeren Oberfläche des Strömungsregulierungszylinders (9) an einer Position, an der die Düse (8) des Gehäuses (30) angeordnet ist, die folgende Formel erfüllen:

$$10 \geq L2/L1 \geq 0,5.$$

**Revendications**

1. Module de membranes à fibres creuses (101) comprenant :

un faisceau de membranes à fibres creuses (2) comprenant une pluralité de membranes à fibres creuses ;
une première partie de mise en faisceau et de fixation (11) au niveau de laquelle le faisceau de membranes à fibres creuses (2) est mis en faisceau et fixé dans un état où au moins une première partie d'extrémité du faisceau de membranes à fibres creuses (2) est maintenue ouverte ;
un boîtier (30) ayant au moins une buse (8) sur une surface latérale de celui-ci plus proche de la première partie d'extrémité et recevant le faisceau de membranes à fibres creuses (2) à l'intérieur ; et
un cylindre de régulation de débit (9) ayant une pluralité de trous de régulation de débit (10) et existant entre la première partie de mise en faisceau et de fixation (11) et le boîtier (30) pour être fixé de manière étanche aux liquides entre la première partie de mise en faisceau et de fixation (11) et le boîtier (30),
**caractérisé en ce que** :

le boîtier (30) est configuré de manière à avoir une partie de petit diamètre (3B) qui a un diamètre intérieur inférieur à un diamètre intérieur du cylindre de régulation de débit faisant face à une partie du boîtier (30) sur laquelle la buse (8) est prévue, et qui est agencée sur un côté inférieur à une extrémité inférieure du cylindre de régulation de débit (9) dans une direction axiale du module de membranes à fibres creuses (101), une deuxième partie de mise en faisceau et de fixation (12) qui met en faisceau les faisceaux de membranes à fibres creuses (2) dans un état où la deuxième partie d'extrémité de ceux-ci est scellée par un premier joint (15) qui assure l'étanchéité aux liquides entre le boîtier (30) et le cylindre de régulation de débit (9), et un deuxième joint (16) qui assure l'étanchéité aux liquides entre le cylindre de régulation de débit (9) et la première partie de mise en faisceau et de fixation (11),

la longueur des membranes à fibres creuses s'étendant de l'extrémité inférieure de la partie de fixation supérieure (11) à l'extrémité supérieure de la partie de fixation inférieure (12) qui met en faisceau les faisceaux de membranes à fibres creuses (2) dans un état où la deuxième partie d'extrémité de ceux-ci est scellée, est supérieure à la distance linéaire de position (L) entre l'extrémité inférieure de la partie de fixation supérieure (11) et l'extrémité supérieure de la partie de fixation inférieure (12), où le boîtier (30) comprend un corps de boîtier cylindrique, étagé (3) ayant une pluralité de diamètres, un capuchon supérieur (4) disposé sur le côté d'extrémité supérieure du corps de boîtier (3) pour couvrir l'ouverture, et un capuchon inférieur (5) disposé sur le côté d'extrémité inférieure du corps de boîtier (3) pour couvrir l'ouverture depuis le bas, où le capuchon supérieur (4) et le corps de boîtier (3), ainsi que le corps de boîtier (3) et le capuchon inférieur (5) sont respectivement reliés de manière étanche aux liquides par un joint d'étanchéité et une pince,

dans lequel le corps de boîtier (3) a une pluralité de diamètres, comprenant une partie de grand diamètre (3A) de la partie supérieure et une partie de petit diamètre (3B) de la partie inférieure, où la partie de grand diamètre (3A) et la partie de petit diamètre (3B) sont configurées pour avoir un axe commun dans la direction longitudinale du boîtier (30), et la face périphérique intérieure de la partie de grand diamètre (3A) et la face périphérique intérieure de la partie de petit diamètre (3B) sont coniques reliées l'une à l'autre, où au niveau de l'extrémité supérieure du corps de boîtier (3), une bride (3C) est prévue, et à son extrémité inférieure, une bride (3D) est prévue, les deux couvrant toute la circonférence du corps de boîtier (3),

dans lequel le diamètre du capuchon inférieur (5) se réduit vers le côté d'extrémité inférieure, formant ainsi un orifice d'entrée de liquide brut (6),

dans lequel le diamètre intérieur (Di) de la partie de petit diamètre (3B) est réalisé plus petit que le diamètre intérieur (D1) du cylindre de régulation de débit (9) dans la partie où existent des trous de régulation de débit, et est réalisé pour être presque identique au diamètre le plus extérieur (Df) de la région existante de membrane à fibres creuses à l'extrémité inférieure de la première partie de mise en faisceau et de fixation,

dans lequel le diamètre intérieur (Di) de la partie de petit diamètre (3B), le diamètre intérieur (D1) du cylindre de régulation de débit (9) dans la partie où existent des trous de régulation de débit, et le diamètre intérieur (Do) de la partie de grand diamètre (3A) satisfont à une relation Di < D1 < Do, et dans lequel la distance directe L entre l'extrémité inférieure de la première partie de mise en faisceau et de fixation (11) et l'extrémité supérieure de la deuxième partie de mise en faisceau et de fixation (12), et la longueur moyenne (Lm) des membranes à fibres creuses (1) de l'extrémité inférieure de la première partie de mise en faisceau et de fixation (11) à l'extrémité supérieure de la deuxième partie de mise en faisceau et de fixation (12) satisfait D1-Df > (Lm-)/2.

2. Module de membranes à fibres creuses (101) selon la revendication 1, dans lequel la première partie de mise en faisceau et de fixation (11) et le cylindre de régulation de débit (9), et le boîtier (30) et le cylindre de régulation de débit (9) sont fixés de manière étanche aux liquides par collage, respectivement.

3. Module de membranes à fibres creuses (101) selon la revendication 1 ou 2, dans lequel un diamètre le plus extérieur d'une extrémité inférieure de la première partie de mise en faisceau et de fixation (11) dans la direction axiale du module de membranes à fibres creuses (101), et un diamètre le plus extérieur d'une région existante de membrane à fibres creuses où au moins la première partie d'extrémité du faisceau de membranes à fibres creuses (2) existe à l'extrémité inférieure de la première partie de mise en faisceau et de fixation (11) dans la direction axiale du module de membranes à fibres creuses (101), satisfont à la formule suivante :

$$Df < Du$$

dans laquelle :

Df est le diamètre le plus extérieur de la région existante de membrane à fibres creuses à l'extrémité de la première partie de mise en faisceau et de fixation (11), an

Du est le diamètre le plus extérieur de l'extrémité inférieure de la première partie de mise en faisceau et de fixation (11).

4. Module de membranes à fibres creuses (101) selon l'une quelconque des revendications 1 à 3, comprenant en outre :

une partie de fixation qui fixe la première partie de mise en faisceau et de fixation de manière amovible par rapport au boîtier ;

une partie de scellement qui assure l'étanchéité aux liquides entre la première partie de mise en faisceau et de fixation (11) et le boîtier (30) ; et une partie de maintien (218) qui maintient la deuxième partie de mise en faisceau et de fixation (12) de sorte que la deuxième partie de mise en faisceau et de fixation (12) soit amovible par rapport au boîtier (30) et de sorte que le liquide soit capable de passer entre la deuxième partie de mise en faisceau et de fixation (12) et le boîtier (30).

5. Module de membranes à fibres creuses selon l'une quelconque des revendications 1 à 4, comprenant en outre :

une deuxième partie de mise en faisceau et de fixation (12) qui met en faisceau le faisceau de membranes à fibres creuses (2) dans un état où une deuxième partie d'extrémité de celui-ci est scellée ;

une première partie de fixation qui fixe le cylindre de régulation de débit (9) de manière amovible par rapport au boîtier (30) ;

une première partie de scellement qui assure l'étanchéité aux liquides entre le cylindre de régulation de débit (9) et le boîtier (30) ;

une deuxième partie de fixation qui fixe la première partie de mise en faisceau et de fixation (11) de manière amovible par rapport au cylindre de régulation de débit (9) ;

une deuxième partie de scellement qui assure l'étanchéité aux liquides entre la première partie de mise en faisceau et de fixation (11) et le cylindre de régulation de débit (9) ; et une partie de maintien (218) qui maintient la deuxième partie de mise en faisceau et de fixation (12) de sorte que la deuxième partie de mise en faisceau et de fixation (12) soit amovible par rapport au boîtier (30) et de sorte que le liquide puisse passer entre la deuxième partie de mise en faisceau et de fixation (12) et le boîtier (30).

6. Module de membranes à fibres creuses (101) selon l'une quelconque des revendications 1 à 5, dans lequel une distance L1 entre le diamètre le plus extérieur de la région existante de membrane à fibres creuses où la première partie d'extrémité existe, et une surface intérieure du cylindre de régulation de débit (9) satisfait à la formule suivante :

$$L1 \geq 3 \text{ mm.}$$

7. Module de membranes à fibres creuses (101) selon l'une quelconque des revendications 1 à 6, dans lequel la distance L1 entre le diamètre le plus extérieur de la région existante de membrane à fibres creuses où la première partie d'extrémité existe, et la surface intérieure du cylindre de régulation de débit (9), et une distance L2 entre une surface intérieure du boîtier et une surface extérieure du cylindre de régulation de débit (9) à une position où la buse (8) du boîtier (30) est agencée, satisfont à la formule suivante :

$$10 \geq L2/L1 \geq 0,5$$

*Fig. 1*

*Fig. 2*

*Fig. 3*

*Fig. 4*

*Fig. 5*

*Fig. 6*

*Fig. 7*

*Fig. 8*

*Fig. 9*

*Fig. 10*

Fig. 11

*Fig. 12*

*Fig. 13*

*Fig. 14*

*Fig. 15*

*Fig. 16*

*Fig. 17*

*Fig. 18*

*Fig. 19*

*Fig. 20*

$(Lm-L)/2$

## Fig. 21

*Fig. 22*

*Fig. 23*

*Fig. 24*

*Fig. 25*

*Fig. 26*

*Fig. 27*

*Fig. 28*

*Fig. 29*

*Fig. 30*

*Fig. 31*

11C

100C

*Fig. 32*

*Fig. 33*

*Fig. 34*

*Fig. 35*

*Fig. 36*

# Fig. 37

# Fig. 38

*Fig. 39*

*Fig. 40*

*Fig. 41*

*Fig. 42*

**EP 3 088 069 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 4647377 A
- WO 2012043679 A1
- US 2007039868 A1
- JP 7079953 B
- JP 2010234200 A
- WO 2008035593 A